# EUROPÄISCHE PATENTSCHRIFT

(11) **EP 2 848 848 B1**
(45) Veröffentlichungstag und Bekanntmachung des Hinweises auf die Patenterteilung: **06.06.2018**
(21) Anmeldenummer: 14184309.4
(22) Anmeldetag: 10.09.2014
(51) Int. Cl.: F16L 5/08, H02G 3/22, F16L 5/14

(54) **Dichtungsvorrichtung**
Sealing device
Element d'étanchéité

(30) Priorität: 11.09.2013 DE 202013007989 U
(43) Veröffentlichungstag der Anmeldung: 18.03.2015
(73) Patentinhaber: UGA System-Technik GmbH & Co. KG, 89542 Herbrechtingen (DE)
(72) Erfinder: Seifried, Ernst, 86507 Kleinaitingen (DE)
(74) Vertreter: Eisenführ Speiser

(56) Entgegenhaltungen:
- CH-A5- 692 514
- DE-A1-102009 047 928
- DE-U1- 29 906 645
- DE-U1-202009 004 739
- DE-U1-202009 012 060
- DE-U1-202010 010 955
- DE-U1-202011 106 504

## Beschreibung

Die Erfindung betrifft eine Dichtungsvorrichtung zum Abdichten eines Medienrohres, insbesondere mit durch das Medienrohr geführten Leitungen, gegenüber einem Durchbruch in einer Wand, mit wenigstens zwei axial hintereinander angeordneten Dichtungskörpern, und wenigstens drei Spannplatten zum axialen Verpressen der Dichtungskörper, wobei jeweils wenigstens eine Spannplatte an axialen Enden der Dichtungsvorrichtung und wenigstens eine Spannplatte zwischen den zwei Dichtungskörpern angeordnet ist.

Im Bereich des Gebäudebaus wird eine Vielzahl von Medienleitungen verlegt, über die das Gebäude mit üblichen Medien versorgt wird, wie zum Beispiel Wasser, Strom, Elektrizität und Telekommunikationsanschlüssen. Die Medienleitungen werden üblicherweise mit Medienrohren, die als Schutzrohre fungieren, ummantelt, um sie vor äußeren Einflüssen, wie beispielsweise Feuchtigkeit, Schmutz, Stößen und dergleichen abzuschirmen. Zum Durchführen der Medienleitungen und des Medienrohres wird ein Durchbruch bzw. eine Laibung in einer Wand ausgebildet, dessen Durchmesser größer ist als der des Medienrohres und/oder der Medienleitungen. Gattungsgemäße Dichtungsvorrichtungen dienen zur Abdichtung des Zwischenraumes zwischen dem Medienrohr und/oder den Medienleitungen und dem Durchbruch.

Eine gattungsgemäße Dichtungsvorrichtung der hiesigen Anmelderin ist in DE 20 2011 106 504 U1 offenbart. Sie weist zwei Dichtungskörper auf, die an beiden Enden mit Spannplatten verbunden sind sowie eine zwischen den beiden Dichtungskörpern angeordnete verpressungsresistente Platte, die als Stützelement für Wellrohre dient.

Eine weitere gattungsgemäße Dichtungsvorrichtung ist in DE 10 2009 047 928 A1 offenbart. Die dort offenbarte Dichtungsvorrichtung weist drei Dichtungskörper auf, wobei zwei von diesen direkt nebeneinander angeordnet sind und von einer Spannplatte getrennt sind. Von den nebeneinander angeordneten Dichtungskörpern weist einer einen geringeren Durchmesser auf und fungiert so als stirnseitiger Anschlag für ein mittels der Dichtungsvorrichtung abgedichtetes Medienrohr.

Mit beiden Dichtungsvorrichtungen lassen sich grundsätzlich Medienrohre gegenüber Wanddurchbrüchen gut abdichten. Sollen allerdings neben dem Medienrohr zusätzlich die durch das Medienrohr geführten (Medien-Leitungen gegenüber der Laibung oder dem Wanddurchbruch abgedichtet werden, müssen bei bekannten Dichtungsvorrichtungen aufwendig zusätzliche Dichtungsmanschetten eingebracht werden, um die Durchmesserdifferenz auszugleichen. Es ist häufig schwierig und aufwendig, den richtigen Verpressungsgrad und somit auch Andruckgrad sowohl für das Medienrohr als auch für die (einzeln abzudichtenden) Leitungen einzustellen.

In DE 20 2010 010 955 U1 ist weiterhin eine Durchführung für ein Wand- oder Bodenelement eines Gebäudes offenbart, mit einer in dem Wand- oder Bodenelement vorgesehenen Gebäudeeinführung mit einem Mantelrohr, einer außenseitig an dem Mantelrohr angeordneten Dichtung zu dem Wand- oder Bodenelement hin zur Befestigung des Mantelrohres darin, einem an das Mantelrohr zu dessen gebäudeaußenseitiger Verlängerung angeschlossenen Schutzrohr, und einem das Mantelrohr in einer zur Leitungsrichtung senkrechten Ebene nicht vollständig ausfüllen Unterteilungsrohr in dem Mantelrohr.

Aufgabe der vorliegenden Erfindung ist es folglich, eine Dichtungsvorrichtung anzugeben, mittels der sowohl ein durch einen Wanddurchbruch geführtes Medienrohr, als auch die durch das Medienrohr geführten Leitungen gegenüber dem Wanddurchbruch auf einfache Art und Weise abzudichten.

Die Erfindung löst die Aufgabe bei einer eingangs genannten Dichtungsvorrichtung durch die Merkmale des Anspruchs 1. Dadurch ist es möglich, zunächst mit beispielsweise dem ersten Dichtungskörper das Medienrohr gegenüber dem Durchbruch abzudichten und anschließend in einem zweiten Schritt mittels des zweiten Dichtungskörpers die durch das Medienrohr geführten Leitungen gegenüber dem Durchbruch abzudichten. Für jeden Dichtungskörper können dabei die Verpressungsgrade unabhängig voneinander eingestellt werden, also die Stärke der Verpressung des Dichtungskörpers zwischen den beiden Spannplatten, so dass sowohl das Medienrohr als auch die Leitungen beanspruchungsgerecht gegenüber dem Wanddurchbruch abgedichtet werden können.

Gemäß einer ersten bevorzugten Ausführungsform ist ein erster der beiden Dichtungskörper zum Abdichten eines Medienrohres vorgesehen und ein zweiter der beiden Dichtungskörper zum Abdichten von durch das Medienrohr geführten Leitungen vorgesehen oder umgekehrt. Hierdurch wird eine genaue Zuordnung der Dichtungskörper zu den durch sie abzudichtenden Rohren bzw. Leitungen erreicht und die Dichtungskörper können entsprechend ihren Aufgaben angepasst werden.

In einer bevorzugten Weiterbildung sind Eingriffsabschnitte der Spannbolzen zum Beaufschlagen der Spannplatten mit einer Presskraft sämtlich von einem axialen Ende, insbesondere von einem Stirn-Ende, der Dichtungsvorrichtung zugänglich, vorzugsweise an diesem angeordnet. Häufig werden Hausanschlüsse für Versorgungsleitungen grabenlos mittels Erdraketen verlegt, so dass die Dichtungsvorrichtung nach dem Einbau, beispielsweise von innen in einem Kellerraum, nur von einer Seite zugänglich ist. Indem alle Eingriffsabschnitte der Spannbolzen von einem axialen Ende, vorzugsweise dem Ende, welches in der Einbausituation zum Raum hin ausgerichtet ist, zugänglich sind, wird der Einbau und die Montage und so das Abdichten des Medienrohrs und der Leitungen weiter vereinfacht.

Vorzugsweise erstrecken sich die Spannbolzen durch entsprechende Durchgangslöcher in den Dichtungskörpern und/oder Spannplatten. Dadurch ist eine kompakte Anordnung der Einzelelemente erreicht und die Spannbolzen sind zusätzlich vor äußeren Umwelteinflüssen wie etwa Wasser oder Schmutz geschützt.

In einer erfindungsgemäßen ersten Alternative erstreckt sich ein erster Satz Spannbolzen von einer ersten an einem axialen Fuß-Ende der Dichtungsvorrichtung bis zu einer zweiten an dem anderen axialen Stirn-Ende der Dichtungsvorrichtung angeordneten Spannplatte und ein zweiter Satz Spannbolzen erstreckt sich von einer zwischen den Dichtungskörpern angeordneten Spannplatte zu der Spannplatte an dem Stirn-Ende der Dichtungsvorrichtung. Mittels des ersten Satzes Spannbolzen ist demnach vorzugsweise der erste fußseitige

Dichtungskörper mittels der am Fuß-Ende angeordneten und der mittleren Spannplatte verpresst. Der zweite Dichtungskörper wird vorzugsweise mittels der mittleren Spannplatte und der am Kopf-Ende angeordneten Spannplatte mittels des zweiten Satzes Spannbolzen verpresst. So wird eine unabhängige Verpressbarkeit der einzelnen Dichtungskörper voneinander erreicht. Hierbei ist also vorzugsweise vorgesehen, dass der erste Satz Spannbolzen so mit den Spannplatten zusammenwirkt, dass der fußseitige Dichtungskörper zwischen der am axialen Fuß-Ende und der zwischen den Dichtungskörpern angeordneten Spannplatten mittels des ersten Satzes Spannbolzen verpressbar ist und der zweite Satz Spannbolzen so mit den Spannplatten zusammenwirkt, dass der stirnseitige Dichtungskörper zwischen der am axialen Stirn-Ende und der zwischen den Dichtungskörpern angeordneten Spannplatten mittels des zweiten Satzes Spannbolzens verpressbar ist.

Bevorzugt ist dabei ferner wenigstens ein Distanzmittel zum Beabstanden des Eingriffsabschnitts des ersten Satzes Spannbolzen von der zwischen den beiden Dichtungskörpern angeordneten Spannplatte vorgesehen. Dadurch wird erreicht, dass die Eingriffsabschnitte des ersten Satzes Spannbolzen sich nicht zwischen den beiden Dichtungskörpern befinden, sondern am stirnseitigen Ende der Dichtungsvorrichtung. Dadurch sind diese durch einen Monteur auf einfache Art und Weise erreichbar und die Montage der Dichtungsvorrichtung ist weiter vereinfacht.

Gemäß einer bevorzugten Ausgestaltung ist das Distanzmittel als Hülse ausgebildet, durch die ein Spannbolzen des ersten Satzes Spannbolzen verläuft und die sich zwischen der Spannplatte, die zwischen den beiden Dichtungskörpern angeordnet ist und dem Eingriffsabschnitt des durch sie verlaufenden Spannbolzen erstreckt. Durch die Hülse wird folglich die mittels des Spannbolzens aufgebrachte Kraft von dem Eingriffsabschnitt bis auf die Spannplatte übertragen, so dass der Dichtungskörper verpressbar ist. Alternativ zu der Hülse kann auch ein beispielsweise ringförmiger Kragen an dem Bolzen vorgesehen sein, der als Anschlag für die mittlere Spannplatte dient.

In einer bevorzugten Weiterbildung sind ein dritter Dichtungskörper und eine vierte Spannplatte vorgesehen, wobei der dritte Dichtungskörper mittels eines dritten Satzes Spannbolzen zwischen der am Fuß-Ende angeordneten Spannplatte und der vierten Spannplatte verpressbar ist. Vorzugsweise erstreckt sich der dritte Satz Spannbolzen von der vierten bis zu einer zweiten an dem anderen axialen Stirn-Ende der Dichtungsvorrichtung angeordneten Spannplatte. Die vierte Spannplatte ist dann vorzugsweise am Fuß-Ende angeordnet, während die erste Spannplatte, die in den zuvor beschriebenen Ausführungsformen an dem Fuß-Ende angeordnet ist, nun zwischen der vierten und der zuvor mittleren Spannplatte angeordnet ist.

In einer erfindungsgemäßen zweiten Alternative weist der erste Dichtungskörper einen kleineren mittleren Durchmesser auf als der zweite Dichtungskörper und ein erster Satz Spannbolzen erstreckt sich von einer ersten an einem axialen Fuß-Ende der Dichtungsvorrichtung angeordneten Spannplatte bis zu einer zwischen den Dichtungskörpern angeordneten Spannplatte und ein zweiter Satz Spannbolzen erstreckt sich von einer zwischen den Dichtungskörpern angeordneten Spannplatte zu einer zweiten an dem anderen axialen Stirn-Ende der Dichtungsvorrichtung angeordneten Spannplatte. Gemäß dieser Alternative ist kein Distanzmittel, insbesondere keine Hülse oder dergleichen vorgesehen. Die Eingriffsabschnitte befinden sich unmittelbar an den Spannplatten, derart, dass die Eingriffsabschnitte des ersten Satzes Spannbolzen an der Spannplatte angeordnet sind, die zwischen den beiden Dichtungskörpern angeordnet ist, also der mittleren Spannplatte. Eine derartige Konfiguration ist gerade bei unterschiedlich großen Dichtungskörpern vorteilhaft. Vorzugsweise ist sowohl der innere Durchmesser als auch der äußere Durchmesser des ersten Dichtungskörpers kleiner als der jeweils innere und äußere Durchmesser des zweiten Dichtungskörpers. Eine derartige Dichtungsvorrichtung kann vorteilhaft sein bei gestuften Wanddurchbrüchen oder in Fällen, in denen Rohre unterschiedlicher Durchmesser miteinander verbunden werden.

Weiterhin ist bevorzugt, dass die Sätze Spannbolzen jeweils auf einem Kreis angeordnet sind, und der von dem ersten Satz Spannbolzen definierte Kreis einen kleineren Durchmesser aufweist als der von dem zweiten Satz Spannbolzen definierte Kreis. Dadurch ist ein Inkontaktkommen mit dem Eingriffsabschnitt durch einen Monteur wesentlich vereinfacht und die Dichtungsvorrichtung kann auf einfache Art und Weise montiert werden.

In einer besonders bevorzugten Weiterbildung sind ferner an den Eingriffsabschnitten der Spannbolzen zum ersten oder zweiten Satz Spannbolzen vorgesehen. In vielen Einsatzfällen wird es vorteilhaft sein, zunächst den ersten Dichtungskörper mittels des ersten Satzes Spannbolzen zu verpressen und erst anschließend den zweiten Dichtungskörper mittels des zweiten Satzes Spannbolzen zu verpressen. Dazu sind vorzugsweise an den Eingriffsabschnitten Anzeigemittel vorgesehen. Derartige Anzeigemittel umfassen vorzugsweise farbliche Markierungen, Zahlenangaben, Buchstabenangaben, Piktogramme. Auch können die Eingriffsabschnitte der Spannbolzen verschiedene Formen aufweisen, wie zum Beispiel rechteckige oder sechseckige Formen.

In einer bevorzugten Weiterbildung ist ferner vorgesehen, dass radial innerhalb des ersten und/oder zweiten Dichtungskörpers ein Wechseleinsatz angeordnet ist. Ein derartiger Wechseleinsatz umfasst beispielsweise Wechseleinsätze für verschiedenartige Leitungen, die durch das Medienrohr geführt werden. Ein Wechseleinsatz kann etwa ein Dichtungskörper sein, der spezielle Durchgangsöffnungen für etwa Zweileitung, Dreileitung, Vierleitung usw. umfasst. Eine andere Art von Wechseleinsatz ist ein Wechseleinsatz mit sogenanntem Zwiebelschnitt, bei dem einzelne Segmente radial sich umschließen und ineinander angeordnet sind, so dass beispielsweise mittels der Hand einzelne Segmente herausgelöst werden, um so den Innendurchmesser eines Dichtungskörpers zu vergrößern und an einen entsprechenden Rohr-Außendurchmesser anzupassen. Auch können andere Einsätze vorgesehen sein, wie beispielsweise Blindstopfen und dergleichen.

In einer bevorzugten Weiterbildung weist wenigstens ein Dichtungskörper ein verpressungsresistentes Stützelement zum Eingreifen in ein Wellental eines wenigstens teilweise durch die Dichtungsvorrichtung geführten Wellrohres auf. Das Stützelement ist vorzugsweise im Wesentlichen ringförmig und hat einen Innendurchmesser, der kleiner ist als ein Außendurchmesser eines durch die Dichtungsvorrichtung zu führenden Wellrohres, gemessen an einem Wellenberg, wobei der Innendurchmesser größer ist als ein Außendurchmesser des Wellrohres, gemessen an einem Wellental. Das Stützelement dient bevorzugt dazu, eine axiale Position der Dichtungsvorrichtung an dem Wellrohr festzulegen. Das Stützelement teilt den es aufweisenden Dichtungskörper vorzugsweise in zwei axiale Abschnitte, die bevorzug vollständig durch das Stützelement getrennt sind. Dadurch ermöglicht das Stützelement, die axiale Länge des entsprechenden Dichtungskörpers gering zu halten, ohne dabei die gesamte Dichtungsfläche bzw. Kontaktfläche zwischen der Dichtungsvorrichtung und dem Wellrohr in axialer Richtung wesentlich einzuschränken. Die an dem Wellrohr anliegende Kontaktfläche des Dichtungskörpers verformt sich in radialer Richtung dank der geringen axialen Länge des Dichtungskörpers gleichmäßiger entlang der Längsrichtung. Des Weiteren fällt die maximale radiale Ausdehnung eines Dichtungskörpers mit kleiner Breite auch geringer aus als bei einem wesentlich längeren Dichtungskörper bei vergleichbarer Belastung. Das Risiko, das ein Anwender aus Versehen eine zu große Verpressung der Dichtungskörper vornimmt, wird auf diese Weise deutlich reduziert.

Zum Anordnen der Dichtungsvorrichtung mit einem Stützelement weist die Dichtungsvorrichtung vorzugsweise wenigstens einen axialen Schlitz auf. Der Schlitz erstreckt sich in axialer Richtung vorzugsweise vollständig durch die Dichtungsvorrichtung. Es ist bevorzugt vorgesehen, dass die Spannplatten und das Stützelement jeweils wenigstens zwei Schlitze aufweisen, sodass diese im Wesentlichen halbringförmig ausgebildet sind. Die Dichtungskörper weisen vorzugsweise nur einen Schlitz auf, sodass die Dichtungskörper C-förmig aufspreizbar sind. Vorzugsweise sind der Schlitz der Dichtungskörper und wenigstens ein Schlitz der Spannplatten und/oder des Stützelements axial ausgerichtet. So ist die gesamte Dichtungsvorrichtung C-förmig aufweitbar und beispielsweise um ein bereits verlegtes Rohr aus radialer Richtung anordenbar. Vorzugsweise sind an den Spannplatten Verschlussmittel vorgesehen, um die Dichtungsvorrichtung umfänglich zu verschließen. Alternativ sind die Schlitze gerade nicht ausgerichtet, sondern versetzt angeordnet.

Es soll verstanden werden, dass die geschlitzte Ausführung der Dichtungskörper und Spanplatten ebenso bei einer Dichtungsvorrichtung ohne Stützelement bevorzugt ist. Dadurch ist auch eine Dichtungsvorrichtung, wie in den vorstehend beschriebenen bevorzugten Ausführungsformen aus radialer Richtung um ein bereits verlegtes Rohr anordenbar.

In einer alternativen Ausführung weist nur das Stützelement wenigstens einen, vorzugsweise zwei Schlitze auf. Das Stützelement ist vorzugsweise aus zwei Halbringsegmenten gebildet. Jedes Halbringsegment weist vorzugsweise ein oder mehrere Langlöcher auf, durch die die Spannbolzen verlaufen. Die Langlöcher weisen eine Zentralachse, zu der parallel die Spannbolzen verlaufen, und eine Längsache entlang der Längserstreckung des Langlochs, die Senkrecht zu der Zentralachse verläuft. Entlang der Längsachse ist ein das Langloch durchsetzender Spannbolzen in diesem bewegbar. Sind in einem Segment des Stützelements mehrere Langlöcher vorgesehen sind die Längsachsen dieser Langlöcher vorzugsweise parallel zueinander ausgerichtet. Dadurch kann ein Segment des Stützelementes radial relativ zu der Dichtungsvorrichtung verschoben werden, beispielsweise aus dieser herausgezogen werden, um so den Lichten Querschnitt der Dichtungsvorrichtung zu vergrößern, sodass diese auf ein Wellrohr axial aufschiebbar ist.

Gemäß einer vorteilhaften Ausführungsform sind die Spannbolzen als Sechskantschrauben, Zylinderkopfschrauben mit Innensechskant oder Gewindebolzen mit Sechskantmuttern ausgebildet. In einem solchen Ausführungsbeispiel sind die Eingriffsabschnitte der Spannbolzen entsprechend der Außensechskant, der mit einem Maulschlüssel in Kontakt gebracht werden kann. Der Innensechskant, der mit einem Innensechskantschlüssel in Kontakt gebracht werden kann oder die Außensechskantmutter, die wiederum mit einem Maulschlüssel in Kontakt gebracht werden kann.

Ferner ist bevorzugt, dass die Dichtungskörper aus Kautschukmaterial, insbesondere Naturkautschuk NBR, SBR, CR, BR oder EPDM; thermoplastischem oder duroplastischem Kunststoff, lang- oder kurzfaserverstärktem Kunststoff oder Silikon gebildet sind, insbesondere und vorzugsweise in den Stärken 20, 30, 40, 50, 60 oder 90 mm. All diese Materialien und Stärken eignen sich besonders für Dichtungsvorrichtungen für Medienrohre in Wanddurchbrüchen.

In bevorzugten Weiterbildungen sind die Spannplatten aus Stahl, seewasserbeständige Material, Edelstahl, verzinktem Stahl oder einem Kunststoff gebildet.

Die Erfindung wird nachfolgend anhand mehrerer Ausführungsbeispiele detailliert beschrieben. Es zeigen:
- Figur 1: eine perspektivische Ansicht einer Dichtungsvorrichtung gemäß einem ersten Ausführungsbeispiel;
- Figur 2a: eine Seitenansicht der Dichtungsvorrichtung aus Figur 1;
- Figur 2b: eine Schnittansicht der Dichtungsvorrichtung aus Figur 2a gemäß Schnitt A-A;
- Figur 3a: eine Seitenansicht einer Dichtungsvorrichtung gemäß einem zweiten Ausführungsbeispiel;
- Figur 3b: eine Schnittansicht der Dichtungsvorrichtung aus Figur 3a gemäß Schnitt A-A;
- Figur 4a: eine Dichtungsvorrichtung gemäß einem dritten Ausführungsbeispiel;
- Figur 4b: eine Schnittansicht der Dichtungsvorrichtung aus Figur 4a gemäß Schnitt A-A;
- Figur 5a: eine Dichtungsvorrichtung gemäß einem vierten Ausführungsbeispiel;
- Figur 5b: eine Schnittansicht der Dichtungsvorrichtung aus Figur 5a gemäß Schnitt A-A;
- Figur 6a: eine Schnittansicht einer Dichtungsvorrichtung gemäß einem fünften Ausführungsbeispiel;
- Figur 6b: eine perspektivische Ansicht der Dichtungsvorrichtung aus Figur 6a;
- Figur 7a: eine Schnittansicht einer Dichtungsvorrichtung gemäß einem sechsten Ausführungsbeispiel;
- Figur 7b: eine perspektivische Ansicht der Dichtungsvorrichtung aus Figur 7a;
- Figur 8a: eine Seitenansicht einer Dichtungsvorrichtung gemäß einem siebten Ausführungsbeispiel, bei dem die Dichtungskörper verschiedene Durchmesser aufweisen;
- Figur 8b: eine Schnittansicht der Dichtungsvorrichtung aus Figur 8a;
- Figur 9a: eine Seitenansicht einer kombinierten Dichtungsvorrichtung nach einem achten Ausführungsbeispiel mit einer Dichtungsvorrichtung gemäß den Figuren 1 bis 2b, die mittels eines Rohres mit einer Dichtungsvorrichtung nach den Figuren 8a, 8b verbunden ist;
- Figur 9b: eine Schnittansicht der kombinierten Dichtungsvorrichtung aus Figur 9a;
- Figur 10a: eine Seitenansicht einer Dichtungsvorrichtung gemäß einem neunten Ausführungsbeispiel mit drei Dichtungskörpern und vier Spannplatten;
- Figur 10b: eine Schnittansicht der Dichtungsvorrichtung aus Figur 10a;
- Figur 11a: eine Seitenansicht einer Dichtungsvorrichtung gemäß einem zehnten Ausführungsbeispiel mit einem Stützelement;
- Figur 11b: eine Schnittansicht der Dichtungsvorrichtung aus Figur 11a gemäß Schnitt A-A mit einem Stützelement;
- Figur 12: eine Schnittansicht einer Dichtungsvorrichtung gemäß einem elften Ausführungsbeispiel mit einem Stützelement;
- Figur 13: eine Schnittansicht einer Dichtungsvorrichtung gemäß einem zwölften Ausführungsbeispiel mit zwei Stützelementen;
- Figur 14: eine Draufsicht auf die Dichtungsvorrichtung gemäß Figur 13;
- Figur 15: die Dichtungsvorrichtung aus Figur 14 in einer C-förmig aufgespreizten Konfiguration;
- Figur 16: eine Dichtungsvorrichtung gemäß einem dreizehnten Ausführungsbeispiel mit zwei Stützelementen, wobei die Stützelemente verschoben sind und in Figur 16 die Dichtungskörper nicht gezeigt sind; und
- Figur 17: die Dichtungsvorrichtung aus Figur 16 mit Dichtungskörpern.

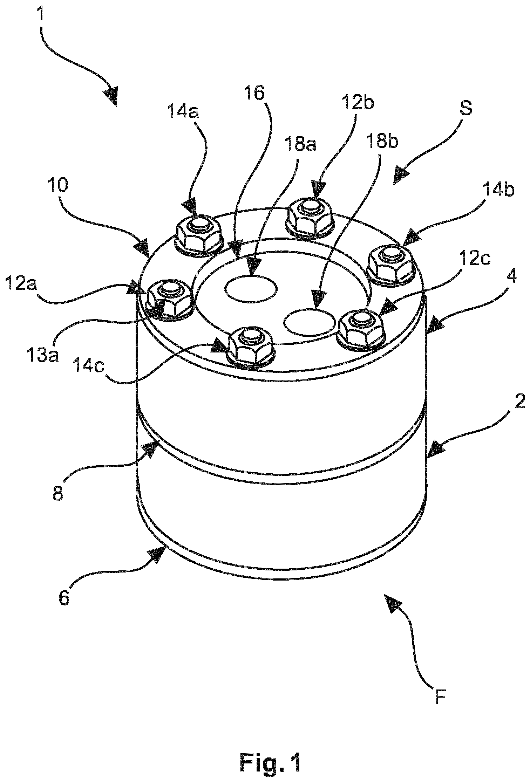

Gemäß Figur 1 weist eine Dichtungsvorrichtung 1 zum Abdichten eines Medienrohres und in dem Medienrohr geführten Leitung gegenüber einem Durchbruch in einer Wand einen ersten Dichtungskörper 2 und einen zweiten Dichtungskörper 4 auf. Die beiden Dichtungskörper 2, 4 weisen eine im Wesentlichen zylindrische Grundform auf und sind bezogen auf Figur 1 übereinander fluchtend angeordnet. Die Dichtungskörper weisen jeweils eine zentrale Öffnung 3, 5 auf, in die ein Rohr einführbar ist. Der Innendurchmesser der Öffnungen 3, 5 entspricht dabei in etwa dem Außendurchmesser des abzudichtenden Rohres.

Ferner weist die Dichtungsvorrichtung 1 drei Spannplatten 6, 8, 10 auf, wobei sowohl an beiden axialen Enden der Dichtungsvorrichtung 1 jeweils eine Spannplatte 6, 10 angeordnet ist, als auch eine Spannplatte 8 zwischen den beiden Dichtungskörpern 2, 4. Die Spannplatte 6 ist in diesem Ausführungsbeispiel am Fuß-Ende F der Dichtungsvorrichtung 1 angeordnet und die Spannplatte 10 ist am Stirn-Ende S der Dichtungsvorrichtung 1 angeordnet.

Ferner weist die Dichtungsvorrichtung 1 zwei Sätze Spannbolzen 12 a, 12b, 12c, 14a, 14b, 14c auf, welche derart mit den Spannplatten 6, 8, 10 verbunden sind, dass die Dichtungskörper 2, 4 unabhängig voneinander verpressbar sind. In diesem Ausführungsbeispiel weist jeder Satz Spannbolzen jeweils drei Spannbolzen auf, nämlich der erste Satz Spannbolzen, die Spannbolzen 12a, 12b, 12c und der zweite Satz Spannbolzen, die Spannbolzen 14a, 14b, 14c. Die Eingriffsabschnitte (13a; in Figur 1 nur beispielhaft einer mit Bezugszeichen versehen) des ersten Satzes Spannbolzen 12a, 12b, 12c weisen eine andere Farbe auf, als der zweite Satz Spannbolzen 14a, 14b, 14c. Die farbliche Gestaltung dient als Anzeigemittel, um die Zugehörigkeit zum jeweiligen Satz Spannbolzen anzuzeigen.

Radial innerhalb des zweiten Dichtungskörpers 4, in der Öffnung 5, ist gemäß diesem Ausführungsbeispiel ferner ein Wechseleinsatz 16 vorgesehen, der gemäß diesem Ausführungsbeispiel zwei Durchgangsöffnungen 18a, 18b für Durchmesser kleinere Leitungen aufweist, und die Öffnung 5 insgesamt ausfüllt. Der erste Dichtungskörper 2 ist dafür vorgesehen, ein Medienrohr abzudichten, während der zweite Dichtungskörper 4 dazu vorgesehen ist, Leitungen, die durch die Öffnungen 18a, 18b geführt werden und von dem Medienrohr (in Figur 1 nicht gezeigt) umhüllt werden, abzudichten.

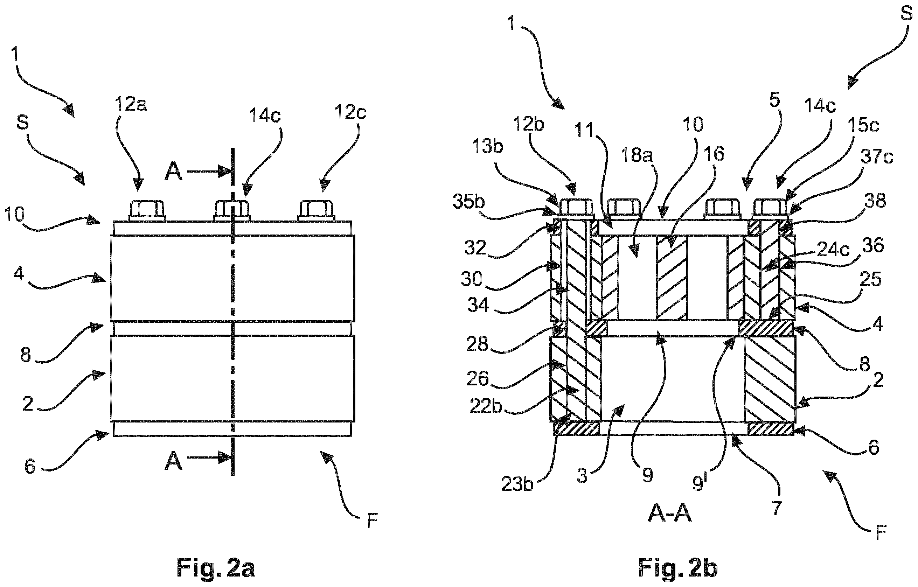

Die Figuren 2a und 2b zeigen die Dichtungsvorrichtung 1 aus Figur 1 in einer Seitenansicht bzw. im Schnitt (Figur 2b). Während in Figur 2a der schichtweise Aufbau der Dichtungsvorrichtung 1 zu erkennen ist, nämlich in Schichten von unten nach oben zunächst am Fuß-Ende F eine Spannplatte 6, darüber der Dichtungskörper 2, darüber die Spannplatte 8, darüber der Dichtungskörper 4 und ganz oben bezogen auf Figur 2a am Stirn-Ende S der Dichtungsvorrichtung 1 die Spannplatte 10.

In Figur 2b ist insbesondere die Anordnung der Spannbolzen 12a, 12b, 12c, 14a, 14b, 14c (in Figur 2b nur die Spannbolzen 12b und 14c mit Bezugszeichen versehen) und deren Zusammenwirken mit den Spannplatten 6, 8, 10 zu erkennen. Der Spannbolzen 12b, der zum ersten Satz Spannbolzen gehört, ist gemäß diesem Ausführungsbeispiel als Gewindebolzen 22b ausgebildet, der (bezogen auf Figur 2b) an seinem oberen bzw. stirnseitigen Ende mit einer den Eingriffsabschnitt 13b bildenden Sechskantmutter zusammenwirkt. Der Eingriffsabschnitt 13b ist am Stirn-Ende S der Dichtungsvorrichtung 1 angeordnet und von diesem aus zugänglich. Am gegenüberliegenden Ende 23b ist der Gewindebolzen 22b mit der Spannplatte 6 verbunden. Der Gewindebolzen 22b verläuft durch eine axial ausgerichtete Durchgangsöffnung 26 in dem Dichtungskörper 2, eine Öffnung 28 in der Spannplatte 8 sowie einer axial ausgerichteten Durchgangsöffnung 30 in dem Dichtungskörper 4 und einer Öffnung 32 in der stirnseitigen Spannplatte 10.

Damit der Spannbolzen 12b mit der mittleren Spannplatte 8 und der fußseitigen Spannplatte 6 zusammenwirken kann, ist ferner als Distanzmittel eine Hülse 34 vorgesehen, welche im Bereich des stirnseitigen Dichtungskörpers 4 den Gewindebolzen 22b umgibt, sich am unteren Ende (bezogen auf Figur 2b) an der Spannplatte 8 abstützt, sich am stirnseitigen Ende durch die Öffnung 32 in der Spannplatte 10 hindurch erstreckt und mit einer Unterlegscheibe 35b in Kontakt steht, gegen die sich die Mutter 13b des Spannbolzens 12b abstützt. So ist es möglich, durch Aufschrauben der Mutter 13b auf den Gewindebolzen 22b die Presskraft direkt über die Hülse 34 auf die Spannplatte 8 und die Spannplatte 6 zu übertragen, so dass der Dichtungskörper 2 mittels der Spannplatten 6 und 8 verpresst wird.

Der Spannbolzen 14c weist gemäß diesem Ausführungsbeispiel entsprechend einen Gewindebolzen 24c auf, der sich vom stirnseitigen Ende der Dichtungsvorrichtung 1 bis zur mittleren Spannplatte 8 erstreckt. An seinem unteren Ende 25 ist der Gewindebolzen 24c mit der Spannplatte 8 verbunden, um so Kraft auf diese aufzubringen. Der Gewindebolzen 24c verläuft durch eine axial ausgerichtete Durchgangsöffnung 36 im Dichtungskörper 4 und eine Öffnung 38 in der Spannplatte 10. An seinem stirnseitigen Ende ist der Spannbolzen 14c mit einer der Eingriffsabschnitt 15c bildenden Sechskantmutter versehen, die auf den Gewindebolzen 24c aufgeschraubt ist. Die Sechskantmutter stützt sich über eine Unterlegscheibe 37c an der Spannplatte 10 ab. So ist mittels des Spannbolzens 14c (und der weitere Spannbolzen 14a, 14b ebenso; in Figur 2b nicht im Detail gezeigt) eine Presskraft über die Spannplatte 8 und Spannplatte 10 auf den Dichtungskörper 4 aufbringbar, so dass der Dichtungskörper 4 mittels den Spannbolzen 14a, 14b, 14c axial verpressbar ist.

Ferner ist aus Figur 2b die Gestaltung der zentralen Ausnehmungen bzw. Durchgangsöffnungen 7, 9, 11 und Innenradien der Spannplatten 6, 8, 10 sowie die zentralen Öffnungen 3, 5 der Dichtungskörper 2 und 4 ersichtlich. Da der Dichtungskörper 2 zum Abdichten eines Medienrohres vorgesehen ist, welches bezogen auf Figur 2b von unten, also vom fußseitigen Ende aus, in die Dichtungsvorrichtung einschiebbar ist, ist die zentrale Ausnehmung 7 der Spannplatte 6 sowie die zentrale Ausnehmung 3 des Dichtungskörpers 2 bezüglich des inneren Durchmessers so gebildet, dass das Medienrohr einschiebbar ist. Die zentrale Öffnung 9 der Spannplatte 8 weist gegenüber der zentralen Öffnung 7 der Spannplatte 6 sowie der zentralen Öffnung 3 des Dichtungskörpers 2 einen verringerten Durchmesser auf, so dass die Spannplatte 8 einen Anschlag 9' bildet, zum Inkontaktkommen mit dem Medienrohr, welches in die Dichtungsvorrichtung 1 vom fußseitigen Ende aus einschiebbar ist. Der Anschlag 9' bildet ferner auf der der Stirnseite S zugewandten Seite der Spannplatte 8 einen Anschlag für den Wechseleinsatz 16. Dieser kann sich ebenfalls an der Spannplatte 8 bzw. dem Absatz 9 abstützen. Hierdurch wird eine einfache Montage erreicht.

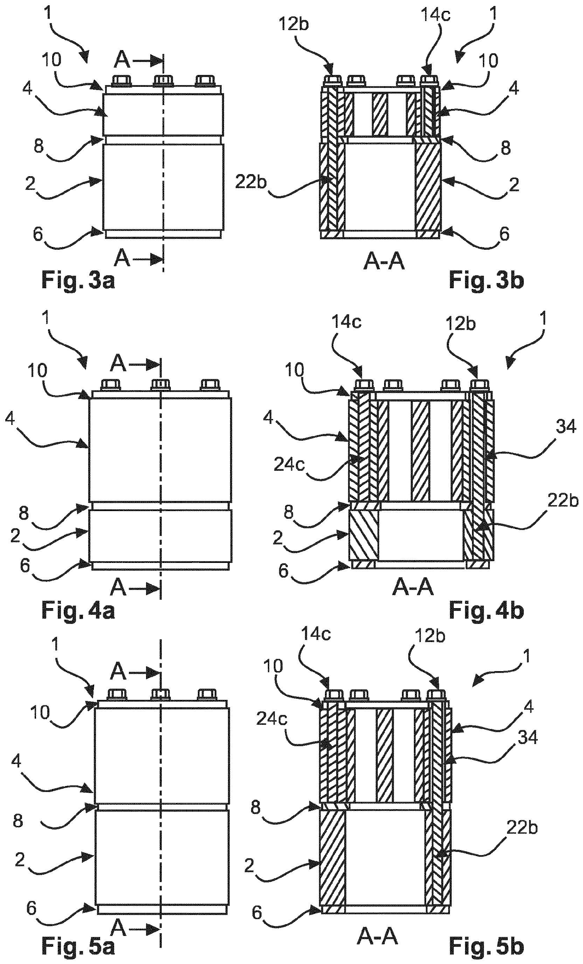

Die Figuren 3a bis 5b zeigen Varianten der in den Figuren 1 bis 2b gezeigten Dichtungsvorrichtung. Gleiche und ähnliche Elemente sind mit gleichen Bezugszeichen versehen. Insofern wird voll umfänglich auf die obige Beschreibung zu den Figuren 1 bis 2b Bezug genommen. Im Folgenden werden insbesondere die Unterschiede der Dichtungsvorrichtung 1 gemäß den Figuren 3a bis 5b zu der Dichtungsvorrichtung 1 gemäß Figuren 1 bis 2b hervorgehoben.

Die Dichtungsvorrichtung 1 gemäß den Figuren 3a bis 5b unterscheiden sich von der in den Figuren 1 bis 2b gezeigten Dichtungsvorrichtung 1 durch eine andere axiale Länge der Dichtungskörper 2, 4 und einhergehend damit eine andere axiale Länge der Spannbolzen 12b, 14c (in Figuren 3a bis 5b nur zwei mit Bezugszeichen versehen). Während bei den Figuren 3a, 3b dargestellten Dichtungsvorrichtung 1 der stirnseitige Dichtungskörper 4 identisch mit den in den Figuren 1 bis 2b dargestellten Dichtungskörper 4 ausgebildet ist, weist der Dichtungskörper 2 eine größere, insbesondere doppelt so große axiale Länge auf, wie der Dichtungskörper 4. Eine derartige Dichtungsvorrichtung 1 eignet sich besonders für Einsatzfälle, in denen die Dichtfläche für das Medienrohr erhöht sein soll. Entsprechend der vergrößerten axialen Länge des Dichtungskörper 2 ist auch der Gewindebolzen 22b des Spannbolzens 12b verlängert ausgebildet.

Im Gegensatz dazu weist die in den Figuren 4a, 4b dargestellte Dichtungsvorrichtung 1 einen fußseitigen Dichtungskörper 2 auf, der identisch mit dem in den Figuren 1 bis 2b offenbarten Dichtungskörper 2 ist; der Dichtungskörper 4 weist eine vergrößerte axiale Länge auf, die insbesondere doppelt so groß ist wie die des Dichtungskörpers 2. Eine solche Dichtungsvorrichtung 1 eignet sich besonders für Einsatzfälle, in denen die Dichtfläche an den durch das Medienrohr geführten Leitungen erhöht sein soll. Entsprechend der vergrößerten axialen Länge des Dichtungskörpers 4 ist sowohl der Gewindebolzen 24c des Spannbolzens 14c als auch der Gewindebolzen 22b des Spannbolzens 12b samt der Hülse 34 verlängert ausgebildet.

Bei der in den Figuren 5a und 5b gezeigten Dichtungsvorrichtung 1 ist sowohl der fußseitige Dichtungskörper 2, als auch der stirnseitige Dichtungskörper 4 verlängert ausgebildet. Entsprechend eignet sich eine derartige Dichtungsvorrichtung 1 gemäß den Figuren 5a und 5b besonders für Einsatzfälle, bei denen sowohl die Dichtfläche an dem Medienrohr, als auch die Dichtfläche an den durch das Medienrohr geführten Leitungen vergrößert sein soll. Entsprechend sind wiederum die Gewindebolzen 14c und 22b der Spannbolzen 14c und 12b und auch die Hülse 34 verlängert ausgebildet.

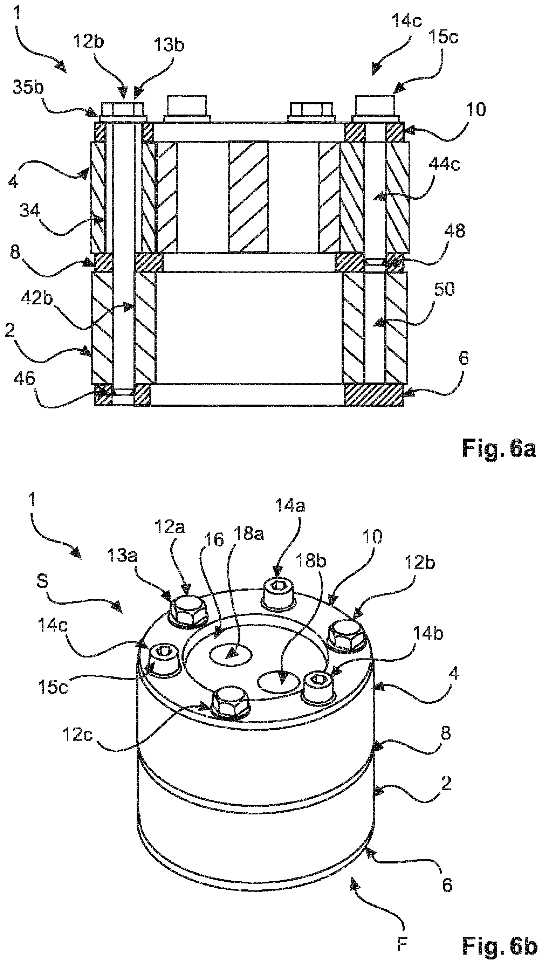

In den Figuren 6a bis 7b sind wiederum Varianten der Dichtungsvorrichtung 1 dargestellt. Gleiche und ähnliche Elemente sind mit gleichen Bezugszeichen versehen, insofern wird unabhängig auf die obige Beschreibung zu den Figuren 1 bis 5b Bezug genommen. Im Folgenden wird insbesondere auf die Unterschiede eingegangen.

Die in den Figuren 6a und 6b gezeigte Dichtungsvorrichtung 1 nach dem fünften Ausführungsbeispiel weist grundsätzlich denselben Aufbau, wie die Dichtungsvorrichtung 1 gemäß den Figuren 1 bis 2b auf. Im Unterschied zu dem ersten Ausführungsbeispiel gemäß den Figuren 1 bis 2b sind allerdings die Spannbolzen 12a, 12b, 12c, 14a, 14b, 14c nicht als Gewindebolzen mit Mutter ausgebildet, sondern als Schrauben. Entsprechend weist der Spannbolzen 12b gemäß dem fünften Ausführungsbeispiel (Figuren 6a, 6b) einen mit einem Außengewinde versehenden Schraubenschaft 42b auf, der sich durch die Hülse 34 in dem Dichtungskörper 4, die Spannplatte 8 und den Dichtungskörper 2 hindurch erstreckt, bis in eine Gewindebohrung 46 in der fußseitigen Spannplatte 6 hinein. Der Eingriffsabschnitt 13b ist als Außensechskant-Schraubenkopf ausgebildet. Dieser stützt sich (ebenso wie bei dem Ausführungsbeispiel gemäß Figuren 1 bis 2b) auf einer Unterlegscheibe 35b ab, die auf der Hülse 34 aufliegt, die wiederum gegen die Spannplatte 8 abgestützt ist. Dadurch ist der fußseitige Dichtungskörper 2 mittels des Spannbolzens 12b zwischen den Spannplatten 8 und 6 verpressbar.

Gemäß diesem Ausführungsbeispiel (Figuren 6a, 6b) ist auch der Spannbolzen 14c als Schraube ausgebildet und weist entsprechend einen mit einem Außengewinde versehenden Schraubenschaft 44c auf. Der Schraubenschaft 44c des Spannbolzens 14c erstreckt sich durch die Spannplatte 10 und den Dichtungskörper 4 hindurch und kommt in Eingriff mit einer Gewindebohrung 48 in der Spannplatte 8. Ferner ist in dem Dichtungskörper 2 fluchtend mit dem Schraubenschaft 44 eine Öffnung 50 vorgesehen, in die der Schraubenschaft 44c beim Verpressen des Dichtungskörpers 4 eindringen kann. Dadurch wird beim Verpressen des Dichtungskörpers 4 der Dichtungskörper 2 nicht verformt oder beschädigt. Der Eingriffsabschnitt 15c des Spannbolzens 14c ist gemäß diesem Ausführungsbeispiel (Figuren 6a, 6b) als Innensechskant-Schraubenkopf ausgebildet. Wie insbesondere aus Figur 6b ersichtlich ist, sind sämtliche Eingriffsabschnitte 13a, 13b, 13c der Spannbolzen 12a, 12b, 12c als Außensechskant ausgebildet, während die Eingriffsabschnitte 15a, 15b, 15c der Spannbolzen 14a, 14b, 14c als Innensechskant ausgebildet sind. Durch diese unterschiedliche Wahl der Schraubenköpfe fungieren diese als Anzeigemittel der Zugehörigkeit der Spannbolzen zu dem jeweiligen Satz Spannbolzen.

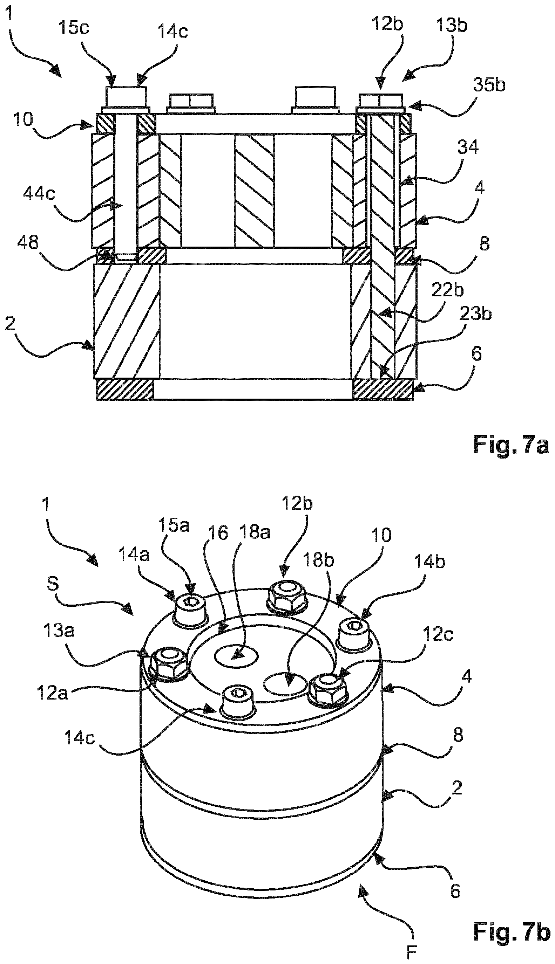

Die in den Figuren 7a, 7b gezeigte sechste Ausführungsform der Dichtungsvorrichtung 1 kann als Kombination der Ausführungsformen gemäß den Figuren 1 bis 2b und 6a, 6b verstanden werden. Gleiche und ähnliche Elemente sind mit gleichen Bezugszeichen versehen, insofern wird voll umfänglich auf die obige Beschreibung zu den Figuren 1 bis 6b Bezug genommen.

Der Aufbau der Dichtungsvorrichtung 1 gemäß Figuren 7a, 7b ist im Wesentlichen gleich zu dem Aufbau der Dichtungsvorrichtung 1 gemäß Figuren 1 bis 2b und 6a, 6b. Die Dichtungsvorrichtung 1 gemäß dem vorliegenden siebten Ausführungsbeispiel (Figuren 7a, 7b) zeichnet sich dadurch aus, dass die Spannbolzen 12a, 12b, 12c des ersten Satzes Spannbolzen als Gewindebolzen 22b (in Figur 7a nur einer mit Bezugszeichen versehen) ausgebildet sind, also ebenso wie die Spannbolzen 12a, 12b, 12c gemäß dem ersten Ausführungsbeispiel (Figuren 1 bis 2b). Auch bei diesem Ausführungsbeispiel (Figuren 7a, 7b) verläuft der Gewindebolzen 22b vom stirnseitigen Ende der Dichtungsvorrichtung 1 durch eine Hülse 34, die sich durch die Spannplatte 10 und den Dichtungskörper 4 erstreckt und gegen die Spannplatte 8 abgestützt ist, sowie durch die Spannplatte 8 und den Dichtungskörper 2 hindurch und ist am fußseitigen Ende mit der Spannplatte 6 verbunden. Der Eingriffsabschnitt 13b des Spannbolzens 12b wird ebenso wie beim ersten Ausführungsbeispiel (Figuren 1 bis 2b) von einer Sechskantmutter gebildet, die gegen eine Unterlegscheibe 35b abgestützt ist und auf den Gewindebolzen 22b aufgeschraubt ist.

Die Spannbolzen 14a, 14b, 14c gemäß diesem sechsten Ausführungsbeispiel (Figur 7a, 7b) sind entsprechend dem fünften Ausführungsbeispiel gemäß Figuren 6a, 6b ausgebildet, also als Schrauben. Entsprechend weist der Spannbolzen 14c gemäß dem vorliegenden Ausführungsbeispiel (Figuren 7a, 7b) einen mit einem Außengewinde versehenden Schraubenschaft 44c auf, der sich durch die Spannplatte 10 und den Dichtungskörper 4 hindurch in eine Gewindebohrung 48 in der Spannplatte 8 erstreckt. Als Eingriffsabschnitt 15c weist der Spannbolzen 14c entsprechend einen Innensechskant-Schraubenkopf auf.

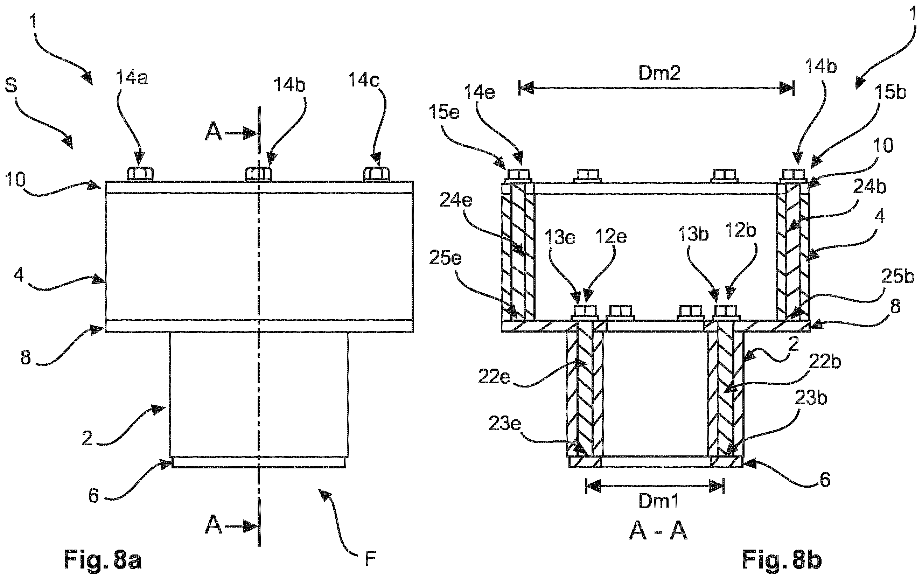

Die Figuren 8a, 8b zeigen ein weiteres siebtes Ausführungsbeispiel, das sich stärker von den vorherigen sechs Ausführungsbeispielen unterscheidet. Gleiche und ähnliche Elemente sind mit gleichen Bezugszeichen versehen, insofern wird voll umfänglich auf die obige Beschreibung zu den Figuren 1 bis 7b verwiesen.

Die in den Figuren 8a, 8b gezeigte Dichtungsvorrichtung 1 weist wiederum zwei Dichtungskörper 2, 4, sowie drei Spannplatten 6, 8, 10 auf. Auch der schichtweise Aufbau vom Fuß-Ende F bis zum Stirn-Ende S der Dichtungsvorrichtung ist im Wesentlichen identisch zu den vorherigen Ausführungsbeispielen. Der wesentliche Unterschied liegt darin, dass der fußseitige Dichtungskörper 2 einen wesentlich geringeren mittleren Durchmesser Dm1 (siehe Figur 8b) aufweist, als der stirnseitige Dichtungskörper 4 (siehe Dm2, Figur 8b). Auch die Spannbolzen 12a bis 12f, 14a bis 14f sind abweichend zu den vorherigen Ausführungsbeispielen nicht auf demselben Kreis angeordnet, sondern definieren jeweils einen eigenen Kreis, der im Durchmesser den mittleren Durchmesser Dm1, Dm2 der Dichtungskörper 2, 4 entspricht. Daher ist es möglich, je Dichtungskörper 2, 4 eine größere Anzahl an Spannbolzen je Satz Spannbolzen vorzusehen, nämlich gemäß diesem Ausführungsbeispiel (Figuren 8a, 8b) jeweils sechs Spannbolzen 12a bis 12f, 14a bis 14f je Satz. Die Spannbolzen des ersten Satzes Spannbolzens 12a bis 12f erstrecken sich nur durch den fußseitigen Dichtungskörper 2 von der mittleren Spannplatte 8 bis zur fußseitigen Spannplatte 6. Sie sind gemäß diesem Ausführungsbeispiel als Gewindebolzen 22b, 22e (in Figur 8 nur zwei mit Bezugszeichen versehen) ausgebildet und die Gewindebolzen sind jeweils mit dem fußseitigen Ende 23b, 23e fest mit der Spannplatte 6 verbunden und erstrecken sich durch den Dichtungskörper 2 hindurch und die Spannplatte 8 hindurch. Die Eingriffsabschnitte 13b, 13e (in Figur 8 nur zwei mit Bezugszeichen versehen) der Spannbolzen 12b, 12e sind unmittelbar benachbart zu der Spannplatte 8 angeordnet. Gemäß diesem Ausführungsbeispiel ist kein Distanzmittel vorgesehen. Dennoch sind die Eingriffsabschnitte 13b, 13e der Spannbolzen 12b, 12e von der Stirnseite S aus zugänglich.

Entsprechend sind die Spannbolzen 14a bis 14f (in Figur 8b nur zwei mit Bezugszeichen versehen) des zweiten Satzes Spannbolzen in diesem Ausführungsbeispiel angeordnet. Sie sind ebenfalls als Gewindebolzen 24b, 24e ausgebildet und mit ihrem Fußende 25b, 25e fest mit der mittleren Spannplatte 8 verbunden. Sie erstrecken sich von der mittleren Spannplatte 8 aus durch den stirnseitigen Dichtungskörper 4 und die stirnseitige Spannplatte 10 hindurch. Die Eingriffsabschnitte 15b, 15e sind unmittelbar benachbart zu der Spannplatte 10 angeordnet.

Bei diesem Ausführungsbeispiel (Figuren 8a, 8b) wird die Doppelfunktion der mittleren Spannplatte 8 besonders deutlich. Sie dient einerseits dazu, mit den fußseitigen Enden 25b, 25e der Spannbolzen 14b, 14e verbunden zu sein und so zusammen mit der Spannplatte 10 ein Verpressen des stirnseitigen Dichtungskörpers 4 zu ermöglichen, als auch zur Aufnahme der Eingriffsabschnitte (insbesondere Muttern) der Spannbolzen 12b, 12e, die wiederum mit der Spannplatte 6 zusammenwirken, um ein Verpressen des Dichtungskörpers 2 zu ermöglichen.

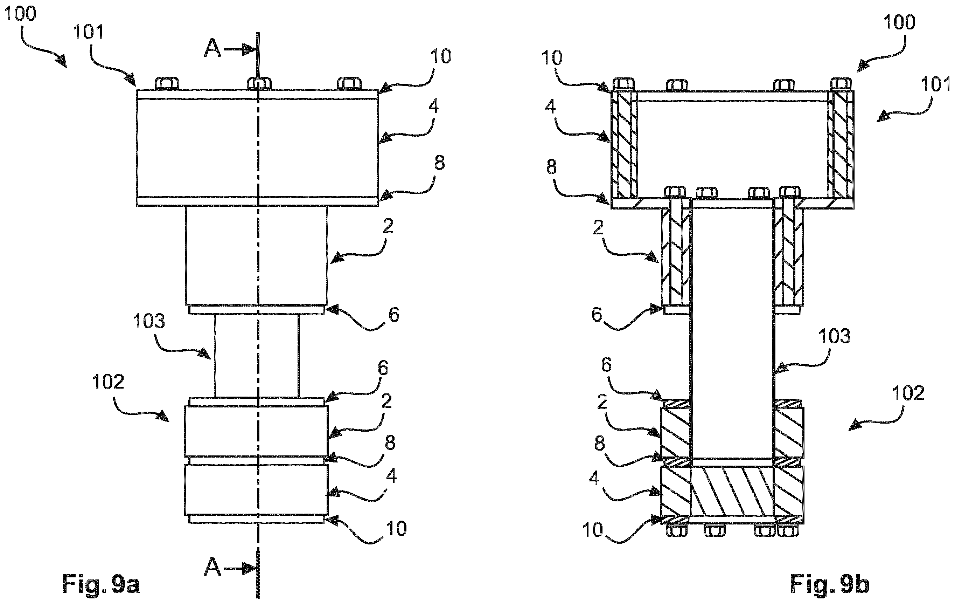

In dem achten Ausführungsbeispiel (Figuren 9a, 9b) ist eine kombinierte Dichtungsvorrichtung 100 gezeigt. Die Dichtungsvorrichtung 100 besteht aus zwei Dichtungsvorrichtungen 101, 102, die mittels eines Verbindungsrohres 103 verbunden sind. Die Dichtungsvorrichtung 101 ist dabei entsprechend der Dichtungsvorrichtung gemäß dem Ausführungsbeispiel aus den Figuren 8a, 8b ausgebildet und die Dichtungsvorrichtung 102 entsprechend gemäß dem Ausführungsbeispiel der Figuren 1 bis 2b. Das Verbindungsrohr 103 ist jeweils so mit dem fußseitigen Dichtungskörper 2 der jeweiligen Dichtungsvorrichtungen 101, 102 verbunden, dass dieses mittels den Dichtungsvorrichtungen 101, 102 mittels Verpressen der Dichtungskörper 2 abdichtbar ist. In diesem Ausführungsbeispiel wird die Flexibilität und vielfältige Einsetzbarkeit der erfindungsgemäßen Dichtungsvorrichtung besonders deutlich.

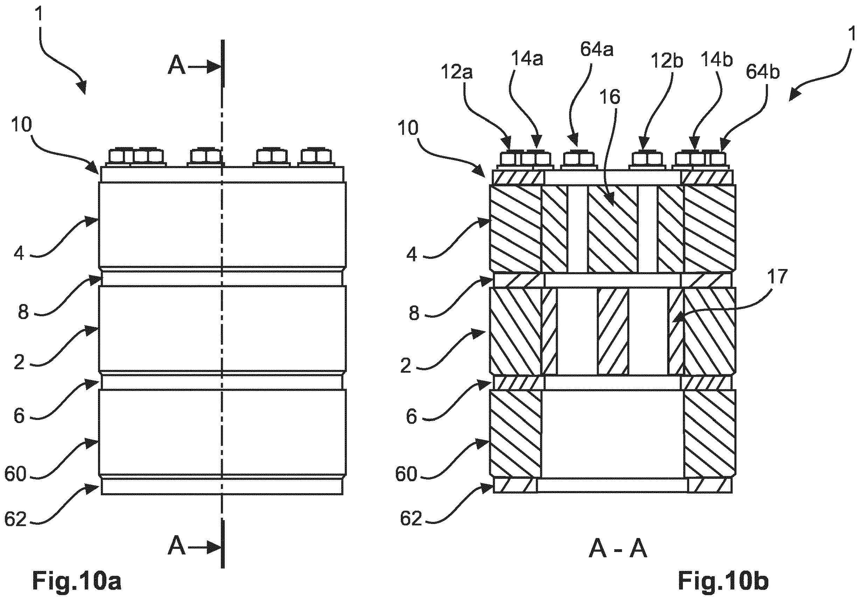

Die Figuren 10a und 10b illustrieren eine Dichtungsvorrichtung 1 nach einem neunten Ausführungsbeispiel. Gleiche und ähnliche Elemente sind mit gleichen Bezugszeichen versehen, insofern wird voll umfänglich auf die obige Beschreibung zu den Figuren 1 bis 9b verwiesen. Die Dichtungsvorrichtung nach dem neunten Ausführungsbeispiel zeichnet sich dadurch aus, dass drei Dichtungskörper 2, 4, 60 sowie vier Spannplatten 6, 8, 10, 62 vorgesehen sind. Der aus den ersten acht Ausführungsbeispielen bekannte schichtweise Aufbau ist hier bei dem neunten Ausführungsbeispiel ebenfalls beibehalten. Die Dichtungsvorrichtung nach dem neunten Ausführungsbeispiel kann auch als dreifachwirkende Dichtungsvorrichtung bezeichnet werden. Der Aufbau der (bezogen auf die Figuren 10a, 10b) oberen beiden Dichtungskörper 2, 4 sowie der zugehörigen Spannplatten 6, 8, 10 mitsamt den Spannbolzen 12a, 12b, 14a, 14b entspricht im Wesentlichen dem Aufbau einem der ersten sechs Ausführungsbeispiele (Figuren 1 bis 7b). Der dritte Dichtungskörper 60 ist zusätzlich unterhalb der bisherigen fußseitigen Spannplatte 6 angeordnet und am (bezogen auf die Figuren 10a, 10b) axial unteren Ende der Dichtungsvorrichtung 1 ist eine vierte Spannplatte 62 angeordnet. Der dritte Satz Spannbolzen 64a, 64b erstreckt sich von der stirnseitigen Spannplatte 10 aus durch die Dichtungskörper 2, 4, 60 und die Spannplatten 6, 8, 10 hindurch und ist in Kontakt oder Eingriff mit der Spannplatte 62. Zusätzlich sind für den dritten Satz Spannbolzen 64a, 64b wiederum als Distanzmittel Hülsen vorgesehen, die sich im Inneren der Dichtungskörper 2, 4, durch diese hindurcherstrecken und sich auf der Spannplatte 6 abstützen, sodass mittels des dritten Satzes Spannbolzen 64a, 64b der dritte Dichtungskörper 60 zwischen den Spannplatten 6 und 60 verpressbar ist.

In den hier mittleren Dichtungskörper 2 und stirnseitigen Dichtungskörper 4 sind gemäß diesem Ausführungsbeispiel Wechseleinsätze 16, 17 eingesetzt.

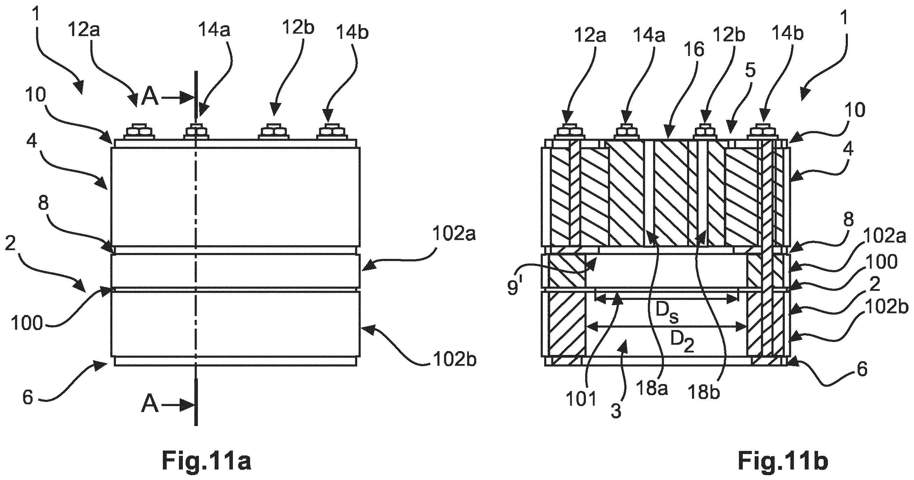

Die Figuren 11a bis 17 zeigen jeweils Dichtungsvorrichtungen 1, bei denen wenigstens ein Dichtungskörper ein verpressungsresistentes Stützelement zum Eingreifen in ein Wellental eines wenigstens teilweise durch die Dichtungsvorrichtung geführten Wellrohres aufweist. Gleiche und ähnliche Elemente sind mit gleichen Bezugszeichen versehen, so dass vollumfänglich auf die obige Beschreibung zu den Figuren 1 bis 10 Bezug genommen wird.

In Figur 11 a ist zunächst eine Dichtungsvorrichtung 1 zum Abdichten eines Medienrohres und in einem Medienrohr geführten Leitung gegenüber einem Durchbruch in einer Wand mit einem ersten Dichtungskörper 2 und einem zweiten Dichtungskörper 4 dargestellt. Ebenso wie bei dem ersten Ausführungsbeispiel (Fig. 1 bis 2b) weisen die beiden Dichtungskörper 2, 4 eine im Wesentlichen zylindrische Grundform auf und sind bezogen auf Figur 11a übereinander fluchtend angeordnet. Die Dichtungskörper 2, 4 weisen jeweils eine zentrale Öffnung 3, 5 (siehe Figur 11b) auf, in die ein Rohr einführbar ist. Der Innendurchmesser der Öffnungen 3, 5 entspricht dabei in etwa dem Außendurchmesser des abzudichtenden Rohres. In der Öffnung 5 des zweiten Dichtungskörpers 4 ist ferner ein Wechseleinsatz 16 vorgesehen, der Durchgangsöffnungen 18a, 18b für durchmesserkleinere Leitungen aufweist. Die Dichtungsvorrichtung 1 weist ferner zwei Sätze Spannbolzen 12a, 12b, 14a, 14b auf, die derart mit den Spannplatten 6, 8, 10 verbunden sind, dass die Dichtungskörper 2, 4 unabhängig voneinander verpressbar sind. Die Spannbolzen 12a, 12b (in den Figuren 11a, 11b nur zwei von jeweils vier je Spannbolzensatz gezeigt) wirken mit den Spannplatten 8 und 10 zum Verpressen des zweiten Dichtungskörpers zusammen, während die Spannbolzen 14a, 14b mit den Spannplatten 6, 8 zum Verpressen des ersten Dichtungskörpers 2 zusammenwirken. Insoweit ist die Dichtungsvorrichtung 1 gemäß diesem Ausführungsbeispiel (Figuren 11a, 11b) entsprechend dem ersten Ausführungsbeispiel (siehe Figuren 1 bis 2b) ausgebildet.

Im Unterschied zu dem ersten Ausführungsbeispiel (Figuren 1 bis 2d) weist die Dichtungsvorrichtung 1 gemäß diesem Ausführungsbeispiel (Figuren 11a bis 11b) zusätzlich jedoch ein verpressungsresistentes Stützelement 100 auf. Das Stützelement 100 ist im Wesentlichen als ringförmige Scheibe ausgebildet und weist eine zentrale Durchgangsöffnung 101 (siehe Figur 11b) auf. Das Stützelement 100 ist gemäß diesem Ausführungsbeispiel im ersten Dichtungskörper 2 angeordnet und teilt diesen in einen ersten Abschnitt 102a und einen zweiten Abschnitt 102b auf, die gemäß diesem Ausführungsbeispiel vollständig durch das Stützelement 100 voneinander separiert sind. Wie sich insbesondere aus Figur 11b ergibt, weist die Durchgangsöffnung 101 des Stützelements 100 einen Durchmesser D_{S} auf, der kleiner ist als ein Durchmesser D₂ des ersten Dichtungskörpers. Der Durchmesser D₂ ist derart angepasst, dass er einem Außendurchmesser eines Wellrohres, gemessen am Wellenberg, entspricht. Der Durchmesser D_{S} ist so gewählt, dass er einem Außendurchmesser eines Wellrohres, gemessen am Wellental, entspricht. Dadurch kann das Stützelement 100 in ein Wellental eines Wellrohres eingreifen. Dadurch wird einerseits eine axiale Positionierung der Dichtungsvorrichtung 1 gegenüber dem Wellenrohr gesichert. Andererseits dient das Stützelement 100 dazu, ein Zusammendrücken und dadurch Verformen des Wellrohres zu verhindern. Das Wellrohr wird gemäß diesem Ausführungsbeispiel (Figuren 11a, 11b) von unten, d.h. in den ersten Dichtungskörper 2 eingeschoben, bis es in Kontakt mit dem Anschlag 9', gebildet durch die Spannplatte 8, in Kontakt kommt. Anschließend können die Dichtungskörper 2, 4 mittels der Spannbolzen 12a bis 14b verpresst werden.

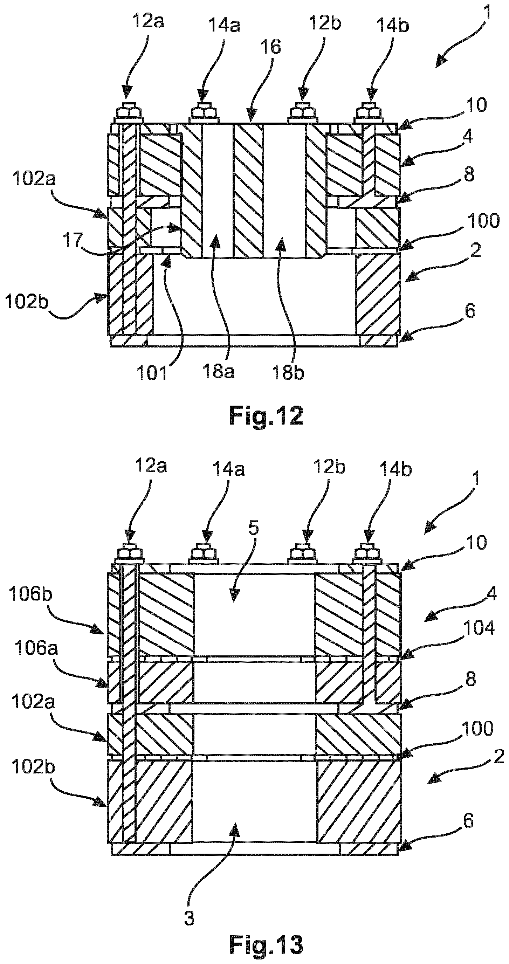

In den Figuren 12 und 13 sind Varianten der Dichtungsvorrichtung 1 gemäß den Figuren 11a, 11b dargestellt. Gemäß Figur 12 weist die Dichtungsvorrichtung 1 wiederum einen ersten Dichtungskörper 2 und einen zweiten Dichtungskörper 4 auf, sowie drei Spannplatten 6, 8 und 10. In dem zweiten Dichtungskörper 4 ist wiederum ein Wechseleinsatz 16 angeordnet. Dieser erstreckt sich jedoch axial aus dem zweiten Dichtungskörper heraus, bis hinter dem ersten Abschnitt 102a des ersten Dichtungskörpers 2 und durch eine Öffnung 101 des Stützelements 100. Dadurch können durch die Öffnungen 18a, 18b geführte Leitungen vorteilhafter in ein, in den ersten Dichtungskörper 2 geschobenes Wellrohr, welches in der Regel als Hülsrohr dient, geführt werden.

In einem zwölften Ausführungsbeispiel (Figur 13) weisen sowohl der erste Dichtungskörper 2 als auch der zweite Dichtungskörper 4 jeweils ein Stützelement 100, 104 auf. Das Stützelement 100 teilt den ersten Dichtungskörper 2 in zwei Abschnitte 102a, 102b, die durch das Stützelement 100 vollständig voneinander separiert sind. Ebenso teilt das zweite Stützelement 104 den zweiten Dichtungskörper 4 in zwei Abschnitte 106a, 106b. Die einzelnen Abschnitte 102a, 102b, 106a, 106b haben jeweils in ihrer axialen Ausdehnung entlang einer Zentralachse der Dichtungsvorrichtung 1 ein Verhältnis von 1:2, d.h. die Abschnitte 102b, 106b haben jeweils eine doppelt so große axiale Ausdehnung wie die Abschnitte 102a, 106a. Dies kann ebenso bei den den anderen Ausführungsbeispielen vorgesehen sein. Gemäß diesem Ausführungsbeispiel (Figur 13) weisen zudem die Öffnungen 3, 5 der Dichtungskörper 2, 4 denselben Innendurchmesser auf. Mittels der Dichtungsvorrichtung 1 gemäß Figur 13 sind demnach zwei Wellrohre mit gleichen Außendurchmessern, miteinander koppel- und abdichtbar.

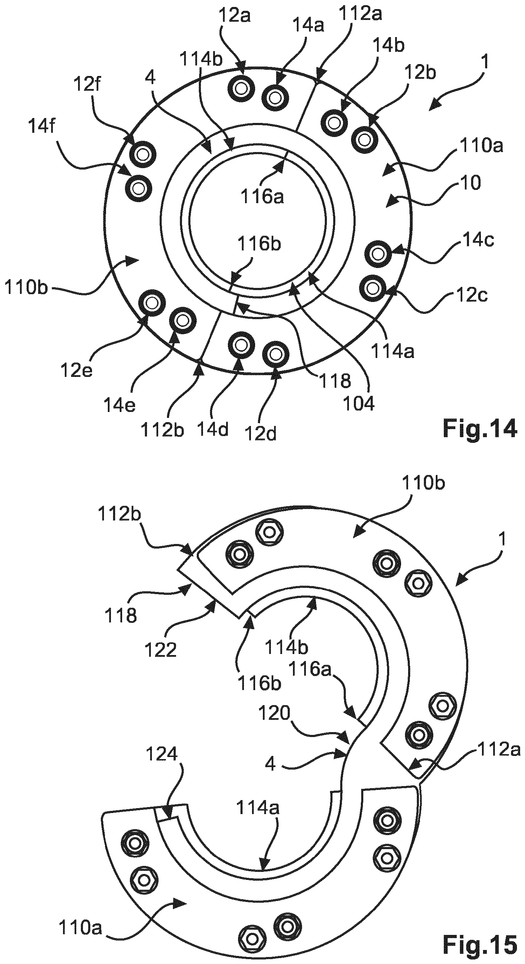

Figur 14 illustriert die in Figur 13 dargestellte Dichtungsvorrichtung 1 in einer Draufsicht. Zu erkennen ist die Spannplatte 10, sowie Eingriffsabschnitte der Spannbolzen 12a bis 12f und 14a bis 14f. Radial innerlich von der Spannplatte 10 ist zunächst ein Abschnitt des Dichtungskörpers 4 zu sehen sowie das radial vorspringende und den lichten Querschnitt verengende Stützelement 104. Die Spannplatte 10 ist gemäß diesem Ausführungsbeispiel zweigeteilt in zwei halbringförmige Abschnitte 110a, 110b. Dazu weist die Spannplatte 10 zwei Schlitze 112a, 112b auf. Ebenso ist das Stützelement 104 in zwei halbringförmige Segmente 114a, 114b unterteilt. Dazu weist auch das Stützelement 104 zwei entsprechende Schlitze 116a, 116b auf. Der Dichtungskörper 4 weist demgegenüber nur einen Schlitz 118 auf. Dadurch ist es möglich, die Dichtungsvorrichtung 1 entlang der Schlitze 112b, 116b, 118 C-förmig aufzuspreizen, wie dies beispielhaft in Figur 15 dargestellt ist. Ein Abschnitt 120 des Dichtungskörpers 4, der in dem Bereich der Schlitze 112a, 116a angeordnet ist, dient dabei als elastisches Scharnier. Wie zu erkennen, insbesondere in Figur 15, ist der Schlitz 118 des Dichtungskörpers 4 nicht mit den Schlitzen 112b, 116b der Spannplatte 10 und des Stützelements 104 ausgerichtet. Dadurch erstreckt sich der Dichtungskörper 4 in einem Abschnitt 122 in Umfangsrichtung von den Kanten der Segmente 110b, 114b, die durch den Schlitz 112b, 116b gebildet werden weg; entsprechend geht der Dichtungskörper 4 in einem Abschnitt 124 hinter die durch die Schlitze 112b, 116b gebildeten Kanten der Segmente 114a, 110a zurück, so dass dort eine Art Ausnehmung gebildet wird. Der Abschnitt 122 des Dichtungskörpers 4 kann somit in Abschnitt 124 eingreifen, wodurch eine Art Formschluss erreicht wird.

Die in den Figuren 14 und 15 dargestellte Dichtungsvorrichtung 1 ist in einer Konfiguration wie in Figur 15 dargestellt in radialer Richtung um bereits verlegte Rohre herum anordenbar. Allerdings stellt ein geschlitzter Dichtungskörper stets eine gewisse Schwächung des Materials dar, das Gleiche gilt für geschlitzte Spannplatten 10, ist jedoch bei vielen Anwendungen, beispielsweise bei einem Einbau in Wanddurchbrüche akzeptabel, da der Schlitz 118 beim Verpressen verschlossen wird.

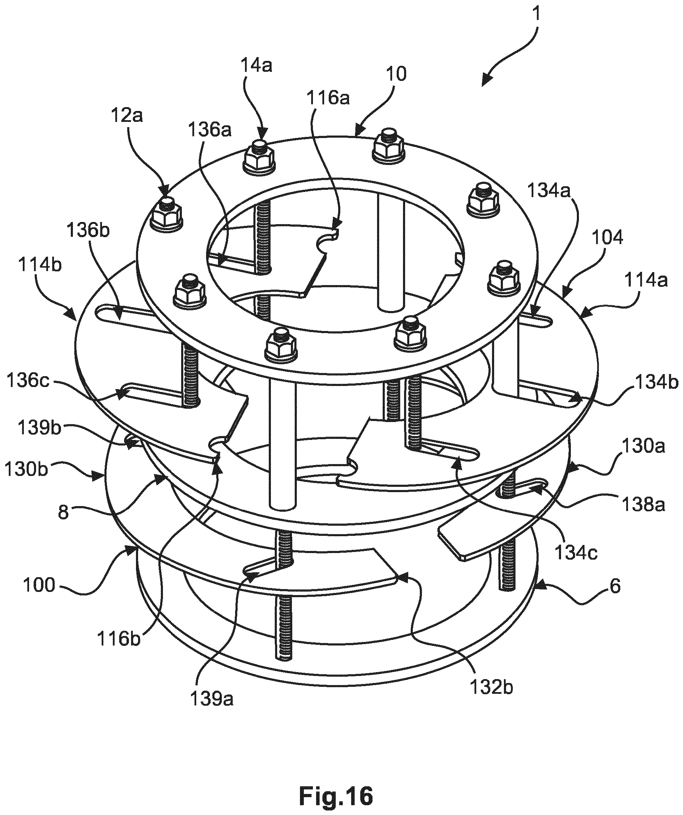

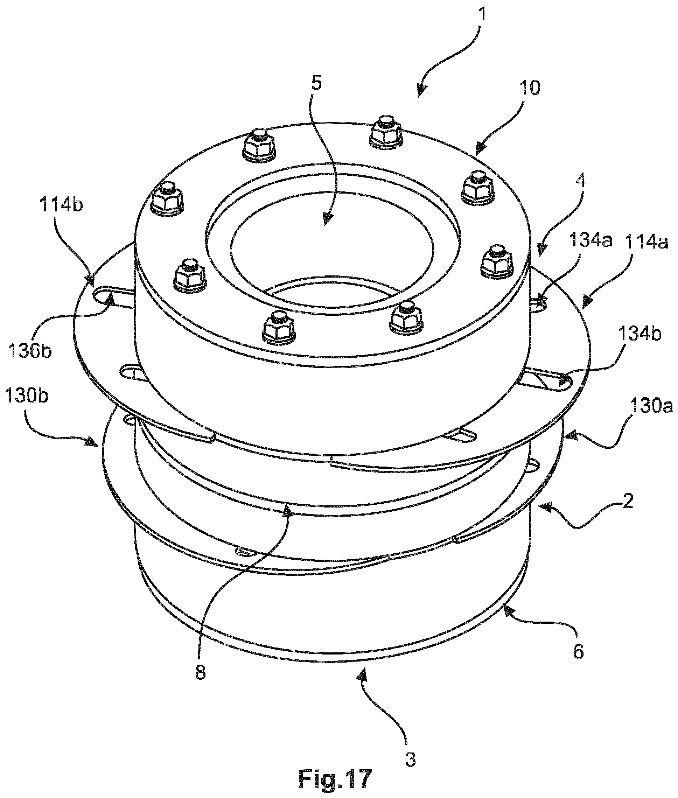

In den Figuren 16 und 17 ist daher eine Alternative dargestellt, bei der die Spannplatten 6, 8, 10 und auch die Dichtungskörper 2, 4 nicht geschlitzt sind. Dennoch weist die Dichtungsvorrichtung 1 gemäß den Figuren 16, 17 Stützelemente 100, 104 auf, wie nachfolgend erläutert werden wird. Die Stützelemente 100, 104 weisen jeweils zwei Schlitze 116a, 116b, 132b, 132a (Schlitz 132a in Figur 16 nicht zu sehen) auf. Dadurch sind die Stützelemente 100, 104 als zwei Halbringsegmente 114a, 114b, 130a, 130b ausgebildet. Um ein Einführen von Wellrohren in die Öffnungen 3, 5 der Dichtungskörper 2, 4 (vgl. auch Figur 17) zu ermöglichen, sind die Segmente 114a, 114b, 130a, 130b jeweils verschieblich in eine Richtung senkrecht zu einer Zentralachse der Dichtungsvorrichtung 1 ausgebildet. Dazu weist jedes Segment 114a, 114b, 130a 130b drei Langlöcher 134a-c, 136a-c, 138a, 139a, b auf. Durch diese Langlöcher erstrecken sich die Spannbolzen 12a-d, 14a-d (in Figur 14 nur jeweils eine mit Bezugszeichen versehen). Die Langlöcher sind zudem mit ihrer Längserstreckung parallel zueinander ausgerichtet. Sie sind zudem senkrecht zu den Schlitzen 116b, 116a, 132a, 132b. Dadurch wird eine besonders einfache Verschieblichkeit der Segmente 114a, 114b, 130a, 130b erreicht. In einer Konfiguration wie in Figur 17 dargestellt, können dann auf leichte Art und Weise Wellrohre in die Öffnungen 3, 5 der Dichtungsvorrichtung 1 eingeführt werden. Anschließend werden die Segmente 114a, 114b, 130a, 130b "eingeschoben", also derart in radialer Richtung bewegt, dass die Segmente aneinander anliegend ein geschlossenes Stützelement bilden und mit einem inneren Abschnitt jeweils in Wellentäler des Wellrohres eingreifen. Anschließend kann die Dichtungsvorrichtung 1 mittels der Spannbolzen 12,14 verpresst werden. In der verpressten Konfiguration sind dann auch die Segmente 114a, 114b, 130a, 130b der Stützelemente 100, 104 fixiert.

## Patentansprüche

1. Dichtungsvorrichtung (1) zum Abdichten eines Medienrohres, insbesondere mit durch das Medienrohr geführten Leitungen, gegenüber einem Durchbruch in einer Wand, mit
wenigstens zwei axial hintereinander angeordneten Dichtungskörpern (2, 4, 60) und wenigstens drei Spannplatten (6, 8, 10, 62) zum axialen Verpressen der Dichtungskörper (2, 4, 60), wobei jeweils wenigstens eine Spannplatte (6, 10, 60) an axialen Enden der Dichtungsvorrichtung (1) und wenigstens eine Spannplatte (6, 8) zwischen den zwei Dichtungskörpern (2, 4, 60) angeordnet ist,
wobei die Spannplatten (6, 8, 10, 62) derart mit Spannbolzen (12a, 12b, 12c, 14a, 14b, 14c, 64a, 64b) zum Beaufschlagen der Spannplatten (6, 8, 10, 62) mit einer Presskraft verbunden sind, dass die Dichtungskörper (2, 4, 60) unabhängig voneinander verpressbar sind, **dadurch gekennzeichnet, dass**
sich ein erster Satz Spannbolzen (12a, 12b, 12c) von einer ersten (6) an einem axialen Fuß-Ende (F) der Dichtungsvorrichtung (1) bis zu einer zweiten (10) an dem anderen axialen Stirn-Ende (S) der Dichtungsvorrichtung (1) angeordneten Spannplatte (6, 10) erstreckt und sich ein zweiter Satz Spannbolzen (14a, 14b, 14c) von einer zwischen den Dichtungskörpern (2, 4) angeordneten Spannplatte (8) zu der Spannplatte (10) an dem Stirn-Ende (S) der Dichtungsvorrichtung (1) erstreckt; oder dass
der erste Dichtungskörper (2) einen kleineren mittleren Durchmesser (Dm1) aufweist als der zweite Dichtungskörper (4) und sich ein erster Satz Spannbolzen (12a, 12b, 12c) von einer ersten (6) an einem axialen Fuß-Ende (F) der Dichtungsvorrichtung (1) bis zu einer zwischen den Dichtungskörpern (2, 4) angeordneten Spannplatte (8) erstreckt und sich ein zweiter Satz Spannbolzen (14a, 14b, 14c) von einer zwischen den Dichtungskörpern (2, 4) zu einer zweiten an dem anderen axialen Stirn-Ende (S) der Dichtungsvorrichtung (1) angeordneten Spannplatte (10) erstreckt.

2. Dichtungsvorrichtung nach Anspruch 1,
**dadurch gekennzeichnet, dass** ein erster der beider Dichtungskörper (2) zum Abdichten eines Medienrohres vorgesehen ist und ein zweiter der beiden Dichtungskörper (4) zum Abdichtung von durch das Medienrohr geführten Leitungen vorgesehen ist oder umgekehrt.

3. Dichtungsvorrichtung nach einem der vorstehenden Ansprüche,
**dadurch gekennzeichnet, dass** Eingriffsabschnitte (13a, 13b, 13c, 15a, 15b, 15c) der Spannbolzen (12a, 12b, 12c, 14a, 14b, 14c) zum Beaufschlagen der Spannplatten (6, 8, 10) mit einer Presskraft sämtlich von einem axialen Ende, insbesondere von einem Stirn-Ende (S), der Dichtungsvorrichtung (1) zugänglich sind, vorzugsweise an diesem angeordnet sind.

4. Dichtungsvorrichtung nach einem der vorstehenden Ansprüche,
**dadurch gekennzeichnet, dass** sich die Spannbolzen (12a, 12b, 12c, 14a, 14b, 14c) durch entsprechende Durchgangslöcher (26, 28, 30, 32, 36, 38) in den Dichtungskörpern (2, 4) und/oder Spannplatten (6, 8, 10) erstrecken.

5. Dichtungsvorrichtung nach einem Anspruch 1,
**dadurch gekennzeichnet, dass** der erste Satz Spannbolzen (12a, 12b, 12c) so mit den Spannplatten (6, 8, 10) zusammenwirkt, dass der fußseitige Dichtungskörper (2) zwischen der am axialen Fuß-Ende (F) und der zwischen den Dichtungskörpern (2, 4) angeordneten Spannplatten (6, 8) mittels des ersten Satzes Spannbolzen (12a, 12b, 12c) verpressbar ist und der zweite Satz Spannbolzen (14a, 14b, 14c) so mit den Spannplatten (6, 8, 10) zusammenwirkt, dass der stirnseitige Dichtungskörper (4) zwischen der am axialen Stirn-Ende (S) und der zwischen den Dichtungskörpern (2, 4) angeordneten Spannplatten (8, 10) mittels des zweiten Satzes Spannbolzen (14a, 14b, 14c) verpressbar ist.

6. Dichtungsvorrichtung nach Anspruch 3,
**gekennzeichnet durch** wenigstens ein Distanzmittel zum Beabstanden des Eingriffsabschnitts (13a, 13b, 13c) des ersten Satzes Spannbolzen (12a, 12b, 12c) von der zwischen den beiden Dichtungskörpern (2, 4) angeordneten Spannplatte (8).

7. Dichtungsvorrichtung nach Anspruch 6,
**dadurch gekennzeichnet, dass** das Distanzmittel als Hülse (34) ausgebildet ist, durch die ein Spannbolzen (12a, 12b, 12c) des ersten Satzes Spannbolzen (12a, 12b, 12c) verläuft und die sich zwischen der Spannplatte (8), die zwischen den beiden Dichtungskörpern (2, 4) angeordnet ist, und dem Eingriffsabschnitt (13a, 13b, 13c) des durch sie verlaufenden Spannbolzen (12a, 12b, 12c) erstreckt.

8. Dichtungsvorrichtung nach einem der vorstehenden Ansprüche,
**gekennzeichnet durch** einen dritten Dichtungskörper (60) und eine vierte Spannplatte (62), wobei der dritte Dichtungskörper (60) mittels eines dritten Satzes Spannbolzen (64a, 64b) zwischen der am Fuß-Ende angeordneten Spannplatte (6) und der vierten Spannplatte (62) verpressbar ist.

9. Dichtungsvorrichtung nach Anspruch 1,
**dadurch gekennzeichnet, dass** die Sätze Spannbolzen (12a-12f, 14a-14f) jeweils auf einem Kreis angeordnet sind, und der von dem ersten Satz Spannbolzen (12a-12f) definierte Kreis einen kleineren Durchmesser (Dm1) aufweist als der von dem zweiten Satz Spannbolzen (14a-14f) definierte Kreis.

10. Dichtungsvorrichtung nach einem der vorstehenden Ansprüche,
**dadurch gekennzeichnet, dass** an den Eingriffsabschnitten (13a, 13b, 13c, 15a, 15b, 15c) der Spannbolzen Anzeigemittel zum Anzeigen der Zugehörigkeit des entsprechenden Spannbolzens zum ersten (13a, 13b, 13c) oder zweiten (15a, 15b, 15c) Satz Spannbolzen vorgesehen sind.

11. Dichtungsvorrichtung nach einem der vorstehenden Ansprüche,
**dadurch gekennzeichnet, dass** radial innerhalb des ersten und/oder zweiten und/oder dritten Dichtungskörpers (2, 4, 60) ein Wechseleinsatz (16, 17) angeordnet ist.

12. Dichtungsvorrichtung nach einem der vorstehenden Ansprüche,
**dadurch gekennzeichnet, dass** wenigstens ein Dichtungskörper (2, 4, 60) ein verpressungsresistentes Stützelement zum Eingreifen in ein Wellental eines wenigstens teilweise durch die Dichtungsvorrichtung geführten Wellrohres aufweist.

13. Dichtungsvorrichtung nach einem der vorstehenden Ansprüche,
**dadurch gekennzeichnet, dass** die Dichtungskörper (2, 4, 60) aus Kautschukmaterial, insbesondere Naturkautschuk NBR, SBR, CR, BR oder EPDM; thermoplastischem oder duroplastischem Kunststoff, lang- oder kurzfaserverstärktem Kunststoff oder Silikon gebildet sind und vorzugsweise eine Stärke von 20, 30, 40 60 oder 90mm aufweisen.

## Claims

1. A sealing device (1) for sealing off a media pipe, particularly having lines run through the media pipe, relative to a penetration in a wall, having
at least two sealing bodies (2, 4, 60) disposed axially one after the other and at least three clamping plates (6, 8, 10, 62) for axially compressing the sealing bodies (2, 4, 60), at least one clamping plate (6, 10, 60) being disposed at each of the axial ends of the sealing device (1) and at least one clamping plate (6, 8) being disposed between the two sealing bodies (2, 4, 60),
the clamping plates (6, 8, 10, 62) being connected to tension bolts (12a, 12b, 12c, 14a, 14b, 14c, 64a, 64b) for applying a press force to the clamping plates (6, 8, 10, 62) such that the sealing bodies (2, 4, 60) can be compressed independently of each other, **characterized in that**
a first set of clamping bolts (12a, 12b, 12c) extends from a first (6) clamping plate at one axial end foot (F) of the sealing device (1) to a second (10) clamping plate at the other axial end face (S) of the sealing device (1), and a second set of clamping bolts (14a, 14b, 14c) extends from a clamping plate (8) disposed between the sealing bodies (2, 4) to the clamping plate (10) at the end face (S) of the sealing device (1), or that
the first sealing body (2) has a smaller average diameter (Dm1) than the second sealing body (4) and a first set of clamping bolts (12a, 12b, 12c) extends from a first clamping plate (6) at one axial end foot (F) of the sealing device (1) to a clamping plate (8) disposed between the sealing bodies (2, 4), and a second set of clamping bolts (14a, 14b, 14c) extends from a clamping plate disposed between the sealing bodies (2, 4) to a second clamping plate (10) disposed at the end face (S) of the sealing device (1).

2. The sealing device according to claim 1,
**characterized in that** a first of the two sealing bodies (2) is provided for sealing off a media pipe and a second of the two sealing bodies (4) is provided for sealing off lines routed through the media pipe, or vice versa.

3. The sealing device according to any one of the preceding claims,
**characterized in that** engaging segments (13a, 13b, 13c, 15a, 15b, 15c) of the clamping bolts (12a, 12b, 12c, 14a, 14b, 14c) for applying a press force to the clamping plates (6, 8, 10) are fully accessible from an axial end, particularly from an end face (S), of the sealing device (1), and are preferably disposed on the same.

4. The sealing device according to any one of the preceding claims, **characterized in that** the clamping bolts (12a, 12b, 12c, 14a, 14b, 14c) extend through corresponding through holes (26, 28, 30, 32, 36, 38) in the sealing bodies (2, 4) and/or clamping plates (6, 8, 10).

5. The sealing device according to claim 1,
**characterized in that** the first set of clamping bolts (12a, 12b, 12c) interacts with the clamping plates (6, 8, 10) such that the sealing body (2) on the foot side can be compressed between the clamping plates (6, 8) disposed at the axial foot end (F) and disposed between the sealing bodies (2, 4) by means of the first set of clamping bolts (12a, 12b, 12c), and that the second set of clamping bolts (14a, 14b, 14c) interacts with the clamping plates (6, 8, 10) such that the sealing body (4) at the end face can be compressed between the clamping plates (8, 10) disposed at the axial end face (S) and disposed between the sealing bodies (2, 4) by means of the second set of clamping bolts (14a, 14b, 14c).

6. The sealing device according to claim 3,
**characterized by** at least one spacing means for spacing the engaging segment (13a, 13b, 13c) of the first set of clamping bolts (12a, 12b, 12c) apart from the clamping plate (8) disposed between the two sealing bodies (2, 4).

7. The sealing device according to claim 6,
**characterized in that** the spacing means (34) is implemented as a sleeve through which runs a clamping bolt (12a, 12b, 12c) of the first set of clamping bolts (12a, 12b, 12c), wherein said sleeve extends between the clamping plate (8) disposed between the two sealing bodies (2, 4) and the engaging segment (13a, 13b, 13c) of the clamping bolt (12a, 12b, 12c) running through the same.

8. The sealing device according to any one of the preceding claims,
**characterized by** a third sealing body (60) and a fourth clamping plate (62), wherein the third sealing body (60) can be compressed by means of a third set of clamping bolts (64a, 64b) between the clamping plate (6) disposed at the foot end and the fourth clamping plate (62).

9. The sealing device according to claim 1,
**characterized in that** the sets of clamping bolts (12a-12f, 14a-14f) are each disposed on a circle, and the circle defined by the first set of clamping bolts (12a-12f) has a smaller diameter (Dm1) than that of the circle defined by the second set of clamping bolts (14a-14f).

10. The sealing device according to any one of the preceding claims,
**characterized in that** indicating means for indicating the association of the corresponding clamping bolt with the first (13a, 13b, 13c) or the second (15a, 15b, 15c) set of clamping bolts are provided on the engaging segments (13a, 13b, 13c, 15a, 15b, 15c) of the clamping bolts.

11. The sealing device according to any one of the preceding claims,
**characterized in that** an interchangeable insert (16, 17) is disposed radially inside the first and/or the second and/or the third sealing body (2, 4, 60).

12. The sealing device according to any one of the preceding claims,
**characterized in that** at least one sealing body (2, 4, 60) comprises a support element resistant to compression for engaging in a trough of a corrugated tube routed at least partially through the sealing device.

13. The sealing device according to any one of the preceding claims,
**characterized in that** the sealing bodies (2, 4, 60) are made of rubber material, particularly natural rubber NBR, SBR, CR, BR, or EPDM; thermoplastic or duroplastic material; long or short fiber-reinforced plastic; or silicone, and preferably have a thickness of 20, 30, 40, 60, or 90 mm.

## Revendications

1. Dispositif d'étanchéité (1) destiné à rendre étanche un tube de milieu, en particulier avec des conduites traversant le tube de milieu, par rapport à un ajour dans un mur, comprenant
au moins deux corps d'étanchéité (2, 4, 60) disposés de façon axiale les uns derrière les autres, et
au moins trois plaques de serrage (6, 8, 10, 62) destinées à serrer axialement les corps d'étanchéité (2, 4, 60), dans lequel respectivement au moins une plaque de serrage (6, 10, 60) est disposée à des extrémités axiales du dispositif d'étanchéité (1) et au moins une plaque de serrage (6, 8) est disposée entre les deux corps d'étanchéité (2, 4, 60), dans lequel lesdites plaques de serrage (6, 8, 10, 62) sont reliées à des boulons de serrage (12a, 12b, 12c, 14a, 14b, 14c, 64a, 64b) destinés à soumettre les plaques de serrage (6, 8, 10, 62) à une force de serrage, de telle sorte que les corps d'étanchéité (2, 4, 60) peuvent être serrés indépendamment les uns des autres, **caractérisé par le fait qu'**
un premier jeu de boulons de serrage (12a, 12b, 12c) s'étend depuis une première plaque de serrage (6) disposée à une extrémité de pied (F) axiale du dispositif d'étanchéité (1) jusqu'à une deuxième plaque de serrage (10) disposée à l'autre extrémité frontale (S) axiale du dispositif d'étanchéité (1), et qu'un deuxième jeu de boulons de serrage (14a, 14b, 14c) s'étend depuis une plaque de serrage (8) disposée entre les corps d'étanchéité (2, 4) vers la plaque de serrage (10) située à l'extrémité frontale (S) du dispositif d'étanchéité (1); ou que
ledit premier corps d'étanchéité (2) présente un diamètre moyen (Dm1) inférieur à celui du deuxième corps d'étanchéité (4), et un premier jeu de boulons de serrage (12a, 12b, 12c) s'étend depuis une première plaque de serrage (6) disposée à une extrémité de pied (F) axiale du dispositif d'étanchéité (1) jusqu'à une plaque de serrage (8) disposée entre les corps d'étanchéité (2, 4), et un deuxième jeu de boulons de serrage (14a, 14b, 14c) s'étend depuis une plaque de serrage disposée entre les corps d'étanchéité (2, 4) vers une deuxième plaque de serrage (10) disposée à l'autre extrémité frontale (S) axiale du dispositif d'étanchéité (1).

2. Dispositif d'étanchéité selon la revendication 1,
**caractérisé par le fait qu'**un premier des deux corps d'étanchéité (2) est prévu pour rendre étanche un tube de milieu et un deuxième des deux corps d'étanchéité (4) est prévu pour rendre étanches des conduites traversant ledit tube de milieu, ou vice versa.

3. Dispositif d'étanchéité selon l'une quelconque des revendications précédentes,
**caractérisé par le fait que** des portions d'engagement (13a, 13b, 13c, 15a, 15b, 15c) des boulons de serrage (12a, 12b, 12c, 14a, 14b, 14c) destinés à soumettre les plaques de serrage (6, 8, 10) à une force de serrage sont toutes accessibles depuis une extrémité axiale, en particulier depuis une extrémité frontale (S), du dispositif d'étanchéité (1), de préférence sont disposées à celle-ci.

4. Dispositif d'étanchéité selon l'une quelconque des revendications précédentes,
**caractérisé par le fait que** les boulons de serrage (12a, 12b, 12c, 14a, 14b, 14c) s'étendent à travers des trous traversants (26, 28, 30, 32, 36, 38) correspondants dans les corps d'étanchéité (2, 4) et/ou les plaques de serrage (6, 8, 10).

5. Dispositif d'étanchéité selon la revendication 1,
**caractérisé par le fait que** le premier jeu de boulons de serrage (12a, 12b, 12c) agit de concert avec les plaques de serrage (6, 8, 10) de telle sorte que le corps d'étanchéité (2) côté pied situé entre les plaques de serrage (6, 8) disposées à l'extrémité de pied (F) axiale et entre les corps d'étanchéité (2, 4) peut être serré au moyen du premier jeu de boulons de serrage (12a, 12b, 12c), et le deuxième jeu de boulons de serrage (14a, 14b, 14c) agit de concert avec les plaques de serrage (6, 8, 10) de telle sorte que le corps d'étanchéité (4) frontal situé entre les plaques de serrage (8, 10) disposées à l'extrémité frontale (S) axiale et entre les corps d'étanchéité (2, 4) peut être serré au moyen du deuxième jeu de boulons de serrage (14a, 14b, 14c).

6. Dispositif d'étanchéité selon la revendication 3,
**caractérisé par** au moins un moyen d'écartement destiné à espacer la portion d'engagement (13a, 13b, 13c) du premier jeu de boulons de serrage (12a, 12b, 12c) par rapport à la plaque de serrage (8) disposée entre les deux corps d'étanchéité (2, 4).

7. Dispositif d'étanchéité selon la revendication 6,
**caractérisé par le fait que** le moyen d'écartement est réalisé sous la forme d'une douille (34) à travers laquelle s'étend un boulon de serrage (12a, 12b, 12c) du premier jeu de boulons de serrage (12a, 12b, 12c) et laquelle s'étend entre la plaque de serrage (8) qui est disposée entre les deux corps d'étanchéité (2, 4) et la portion d'engagement (13a, 13b, 13c) du boulon de serrage (12a, 12b, 12c) s'étendant à travers elle.

8. Dispositif d'étanchéité selon l'une quelconque des revendications précédentes,
**caractérisé par** un troisième corps d'étanchéité (60) et une quatrième plaque de serrage (62), ledit troisième corps d'étanchéité (60) pouvant être serré au moyen d'un troisième jeu de boulons de serrage (64a, 64b) entre la plaque de serrage (6) disposée à l'extrémité de pied et la quatrième plaque de serrage (62).

9. Dispositif d'étanchéité selon la revendication 1,
**caractérisé par le fait que** les jeux de boulons de serrage (12a-12f, 14a-14f) sont disposés chacun sur un cercle, et le cercle défini par le premier jeu de boulons de serrage (12a-12f) présente un diamètre (Dm1) inférieur à celui du cercle défini par le deuxième jeu de boulons de serrage (14a-14f).

10. Dispositif d'étanchéité selon l'une quelconque des revendications précédentes,
**caractérisé par le fait que** des moyens indicateurs destinés à indiquer l'appartenance du boulon de serrage correspondant au premier jeu (13a, 13b, 13c) ou au deuxième jeu (15a, 15b, 15c) de boulons de serrage sont prévus sur les portions d'engagement (13a, 13b, 13c, 15a, 15b, 15c) des boulons de serrage.

11. Dispositif d'étanchéité selon l'une quelconque des revendications précédentes,
**caractérisé par le fait qu'**insert interchangeable (16, 17) est disposé radialement à l'intérieur du premier et/ou du deuxième et/ou du troisième corps d'étanchéité (2, 4, 60).

12. Dispositif d'étanchéité selon l'une quelconque des revendications précédentes,
**caractérisé par le fait qu'**au moins un corps d'étanchéité (2, 4, 60) comprend un élément de support résistant au serrage et destiné à s'engager dans un creux d'onde d'un tube ondulé traversant au moins en partie le dispositif d'étanchéité.

13. Dispositif d'étanchéité selon l'une quelconque des revendications précédentes,
**caractérisé par le fait que** les corps d'étanchéité (2, 4, 60) sont réalisés à partir de matériau de caoutchouc, en particulier de caoutchouc naturel NBR, SBR, CR, BR ou EPDM; de matière plastique thermoplastique ou thermodurcissable, de matière plastique renforcée par des fibres longues ou courtes ou de silicone, et présentent de préférence une épaisseur de 20, 30, 40, 60 ou de 90 mm.
